# EUROPEAN PATENT SPECIFICATION

(11) **EP 2 574 005 B1**
(45) Date of publication and mention of the grant of the patent: **11.12.2019**
(21) Application number: 11782946.5
(22) Date of filing: 18.05.2011
(51) Int. Cl.: H04L 29/08

(54) **CLOUD SERVICE AGENCY, CLOUD COMPUTING METHOD AND CLOUD SYSTEM**
CLOUD-SERVICE-AGENTUR, CLOUD-COMPUTING-VERFAHREN UND CLOUD-SYSTEM
AGENCE DE SERVICES D'INFONUAGIQUE, PROCÉDÉ D'INFONUAGIQUE ET SYSTÈME D'INFONUAGIQUE

(30) Priority: 20.05.2010 CN 201010189387
(43) Date of publication of application: 27.03.2013
(73) Proprietor: ZTE Corporation, Shenzhen, Guangdong 518057 (CN)
(72) Inventor: SHAO, Weixiang, Shenzhen Guangdong 518057 (CN)
(74) Representative: Mozzi, Matteo
(86) International application number: PCT/CN2011/074257
(87) International publication number: WO 2011/144029

(56) References cited:
- CN-A- 101 557 551
- US-A1- 2007 061 487
- US-A1- 2008 080 497
- US-A1- 2010 042 720
- US-A1- 2010 088 234
- ANONYMOUS: "Interoperable Clouds", [Online] 11 November 2009 (2009-11-11), WHITE PAPER FROM THE OPEN CLOUD STANDARDS INCUBATOR,, PAGE(S) 1 - 21, XP007918874, Retrieved from the Internet: URL:http://www.dmtf.org/sites/default/file s/standards/documents/DSP-IS0101_1.0.0.pdf > [retrieved on 2011-06-08] * the whole document *
- MOORE B ET AL: "A service broker and business model for saas applications", COMPUTER SYSTEMS AND APPLICATIONS, 2009. AICCSA 2009. IEEE/ACS INTERNATIONAL CONFERENCE ON, IEEE, PISCATAWAY, NJ, USA, 10 May 2009 (2009-05-10), pages 322-329, XP031471305, ISBN: 978-1-4244-3807-5
- LI,RAN.: 'CLOUD COMPUTING BASED ON AGENCY.' JOURNAL OF WUHAN INSTITUTE OF TECHNOLOGY. vol. 8, no. 5, October 2009, pages 60 - 62, 77
- A V Parameswaran ET AL: "Cloud Interoperability and Standardization", , 1 January 2009 (2009-01-01), XP055318986, Retrieved from the Internet: URL:http://tarjomeh20.com/wp-content/uploa ds/2015/05/Cloud-Interoperability_______5a 8sd74wa1dadada.pdf [retrieved on 2016-11-14]

## Description

### Field of the Invention

The disclosure relates to the field of communication, and in particular to a cloud service broker, a cloud computing method and a cloud system.

### Background of the Invention

As a new method for sharing the infrastructure, cloud computing can connect huge system pools to provide various IT services.

Cloud computing can be usually classified as narrow cloud computing and broad cloud computing. In the above, the broad cloud computing means the delivery and usage pattern of services, and it means getting the needed services through the network according to demand and in an easily extendable way. Such services can be services related to IT, software and internet, and also can be any other services.

At present, when consumers (cloud service requesters) use cloud computing, it is necessary to establish different usage interfaces and platforms for services provided by different cloud computing providers. For example, when a consumer uses the cloud computing provided by Amazon, it is necessary to establish and use an interface and a platform for the cloud service provided by Amazon, and when a user uses the cloud computing provided by Google, it is necessary to establish and use an interface and a platform for the cloud service provided by Google. However, when the consumer needs to use services provided by different providers, particularly cloud services provided by a plurality of small-scale cloud computing providers, as capabilities and interfaces between cloud services are incompatible, an interface and a platform for each provider have to be established respectively. On one hand, it is inconvenient for consumers to use cloud services; on the other hand, the system resources are wasted and the system efficiency is low.

Document US 2010/0042720 relates to a method and system for intelligently leveraging cloud computing resources, including a multi-cloud management module having a plurality of cloud adapters.

A V Parameswaran et al.: "Cloud Interoperability and Standardization", 1 January 2009 discuss different approaches to cloud interoperability.

### Summary of the Invention

The disclosure provides a cloud service broker, a cloud computing method and a cloud system, to solve the problems that it is inconvenient for consumers (cloud service requesters) to use cloud services due to incompatibility between different cloud services, and that the system resources are wasted and the system efficiency is low when consumers use cloud services.

According to one aspect of the disclosure, a cloud service broker is provided, comprising: a cloud service publishing interface module, configured to subscribe to information of cloud computing services and/or resources provided by a plurality of cloud service providers; a cloud service consuming interface module, configured to provide a consuming interface for a cloud service requester to access the cloud service provider; a cloud service processing module, configured to process a cloud service consumer request of the cloud service requester; and a cloud service adapting module, configured to adapt or call, according to the cloud service consumer request, the cloud computing services and/or resources provided by the cloud service provider.

Preferably, the cloud service publishing interface module is configured to subscribe to the information of cloud computing services and/or resources published and supported by at least one cloud service provider of: private cloud, community cloud, public cloud and hybrid cloud; the cloud service consuming interface module is configured to receive the cloud service consumer request of at least one cloud service requester of: WEB service, application and user, return a cloud service consumer response to the cloud service requester, and provide an interface for the cloud service requester to access the cloud computing services and/or resources of the cloud service provider; the cloud service processing module is configured to receive the cloud service consumer request of the cloud service requester through the cloud service consuming interface module, parse the cloud service requested to consume from the cloud service consumer request, select the cloud computing services and/or resources provided by the cloud service provider and/or a function mode, and execute a cloud service operation; and call the cloud service adapting module to adapt the cloud computing services and/or resources of the cloud service provider according to a protocol, send a cloud service adapting request to the cloud service provider, and receive a cloud service adapting response returned by the cloud service provider; and the cloud service adapting module is configured to protocol adapt or call the cloud computing services and/or resources provided by the cloud service provider.

Preferably, the function modes comprise at least one service of: proxy service, security service, Quality of Service (QoS)/Service-level Agreement (SLA) control service, shielding service, permutation service, and synthesis service.

Preferably, the cloud service processing module comprises at least one of: a catalogue database module, configured to store information of cloud computing services and/or resources; a SLA/policy control module, configured to set SLA management and/or control policies for various cloud computing services and/or resources; a security module, configured to provide security assurance for the cloud service requester to access the cloud service; a QoS control module, configured to provide a QoS control for the cloud service; a monitoring management module, configured to monitor the running status of the cloud service; a deployment management module, configured to combine the service function modes of the cloud service broker to configure the cloud service subscribed to by the cloud service broker; a charging module, configured to charge the cloud service requester for accessing the cloud service; a service execution module, configured to select a cloud service and the related service logic and function mode according to the cloud service consumer request, and execute the cloud service operation; and a service logic module, configured to store a cloud service logic.

Preferably, the cloud service adapting module comprises at least one of: a Infrastructure as a Service (IaaS) adapting module, a Data Storage as a Service (DaaS) adapting module, a Platform as a Service (PaaS) adapting module, and a Software as a Service (SaaS) adapting module.

Preferably, the laaS adapting module comprises a common laaS adapting module and/or a dedicated laaS adapting module; the DaaS adapting module comprises a common DaaS adapting module and/or a dedicated DaaS adapting module; the PaaS adapting module comprises a common PaaS adapting module and/or a dedicated PaaS adapting module; the SaaS adapting module comprises a common SaaS adapting module and/or a dedicated SaaS adapting module.

Preferably, the common laaS adapting module is configured to adapt at least one protocol of: Open Virtualization Format (OVF) of the Distributed Management Task Force (DMTF) and Open Cloud Computing Interface (OCCI) of the Open Grid Forum (OGF).

Preferably, the common DaaS adapting module is configured to adapt a Cloud Data Management Interface (CDMI) of Storage Networking Industry Association (SNIA).

According to another aspect of the disclosure, a cloud computing method is further provided, comprising: a cloud service broker receiving a cloud service consumer request sent by a cloud service requester; selecting cloud computing services and/or resources provided by a cloud service provider and/or a function mode, and executing a cloud service operation; adapting or calling the cloud computing services and/or resources provided by the cloud service provider; and returning a cloud service consumer response to the cloud service requester.

Preferably, the step that the cloud service broker adapts or calls the cloud computing services and/or resources provided by the cloud service provider comprises: adapting, according to a protocol, the cloud computing services and/or resources provided by the cloud service provider to be cloud computing services and/or resources complying with the protocol used by the cloud service requester.

Preferably, the function modes comprise at least one service of: proxy service, security service, Quality of Service (QoS)/Service-level Agreement (SLA) control service, shielding service, permutation service, and synthesis service.

Preferably, when the function mode is the permutation service, before the step that the cloud service broker adapts the cloud computing services and/or resources provided by the cloud service provider, the method further comprises: the cloud service broker not receiving a service adapting response from the selected cloud service provider within a set time; the cloud service broker selecting other cloud service provider and sends the cloud service adapting request to said other cloud service provider; and the cloud service broker receiving a service adapting response from said other cloud service provider.

Preferably, when the function mode is the synthesis service, before the step that the cloud service broker adapts the cloud computing services and/or resources provided by the cloud service provider, the method further comprises: the cloud service broker respectively converting the cloud service consumer request into cloud service adapting requests complying with protocols used by a plurality of cloud service providers that provide the cloud services, and respectively sending the cloud service adapting requests to the plurality of cloud service providers; and the cloud service broker receiving a plurality of service adapting responses from the plurality of cloud service providers.

Preferably, the synthesis service comprises static synthesis service and dynamic synthesis service.

According to still another aspect of the disclosure, a cloud system is further provided, comprising: a cloud service requester, a cloud service broker and a cloud service provider, wherein the cloud service requester is configured to send a cloud service consumer request to the cloud service broker; receive a cloud service consumer response from the cloud service broker, and use an interface provided by the cloud service broker to access a cloud service of the cloud service provider; the cloud service broker is configured to subscribe to cloud service information of a plurality of cloud service providers; provide a consuming interface for the cloud service requester to access the cloud service provider; process a cloud service consumer request of the cloud service requester; and adapt or call cloud computing services and/or resources provided by the cloud service provider; and the cloud service provider is configured to receive a cloud service adapting request of the cloud service broker, return a cloud service adapting response to the cloud service broker, and provide cloud computing services and/or resources to the cloud service requester; and publish information of cloud computing services and/or resources to the cloud service broker.

Preferably, the cloud service broker comprises: a cloud service publishing interface module, configured to subscribe to cloud service information of the plurality of cloud service providers; a cloud service consuming interface module, configured to provide the consuming interface for the cloud service requester to access the cloud service provider; a cloud service processing module, configured to process the cloud service consumer request of the cloud service requester; and a cloud service adapting module, configured to adapt or call, according to the cloud service consumer request, the cloud computing services and/or resources provided by the cloud service provider.

Preferably, the cloud service publishing interface module is configured to subscribe to information of cloud computing services and/or resources published and supported by at least one cloud service provider of: private cloud, community cloud, public cloud and hybrid cloud; the cloud service consuming interface module is configured to receive the cloud service consumer request from at least one cloud service requester of: WEB service, application and user, return the cloud service consumer response to the cloud service requester, and provide an interface for the cloud service requester to access the cloud computing services and/or resources of the cloud service provider; the cloud service processing module is configured to receive the cloud service consumer request of the cloud service requester through the cloud service consuming interface module, parse the cloud service requested to consume from the cloud service consumer request, select the cloud computing services and/or resources provided by the cloud service provider and/or a function mode, and execute a cloud service operation; and call the cloud service adapting module to adapt the cloud computing services and/or resources of the cloud service provider according to a protocol, send a cloud service adapting request to the cloud service provider, and receive a cloud service adapting response returned by the cloud service provider; and the cloud service adapting module is configured to protocol adapt or call the cloud computing services and/or resources provided by the cloud service provider.

In the disclosure, a uniform cloud service broker is employed. Thus, when a cloud service requester uses the cloud computing, it is unnecessary to establish a different interface and platform for the cloud computing provided by each cloud service provider. The difference in the implementation of bottom layer during the access of the cloud computing is effectively shielded, and a transparent and uniform cloud computing access platform and interface are provided for cloud service consumers. The solution can solve the problems that it is inconvenient for cloud service requesters to use the cloud computing due to incompatibility between different cloud computing services, and that the system resources are wasted and the system efficiency is low caused by that the system establishes a plurality of different access interfaces and platforms when consumers use the cloud computing. Therefore, the effect of facilitating cloud service requesters to use cloud services provided by different cloud service providers is achieved. Furthermore, the system resources are saved and the system efficiency is improved.

### Brief Description of the Drawings

Drawings described herein are provided for further understanding of the disclosure and form one part of the application. The exemplary embodiments of the disclosure and descriptions thereof are used for explaining the disclosure and form no improper limitation on the disclosure. In the drawings:
Fig. 1 illustrates a usage scenario diagram of a cloud service broker according to the embodiment of the disclosure;
Fig. 2 illustrates a system structure diagram of a cloud service broker according to the embodiment of the disclosure;
Fig. 3 illustrates a structure diagram of a cloud service processing module of the cloud service broker shown in Fig. 2;
Fig. 4 illustrates a structure diagram of a cloud service adapting module of the cloud service broker shown in Fig. 2;
Fig. 5 illustrates a step flow chart of a cloud computing method according to the embodiment of the disclosure;
Fig. 6 illustrates a conversion/translation working mode diagram of a cloud service broker according to the embodiment of the disclosure;
Fig. 7 illustrates a proxy service function diagram of a cloud service broker according to the embodiment of the disclosure;
Fig. 8 illustrates a security service function diagram of a cloud service broker according to the embodiment of the disclosure;
Fig. 9 illustrates a QoS/SLA control service function diagram of a cloud service broker according to the embodiment of the disclosure;
Fig. 10 illustrates a shielding service function diagram of a cloud service broker according to the embodiment of the disclosure;
Fig. 11 illustrates a flow chart of a specific service logic execution embodiment of proxy service, security service, QoS/SLA control service and shielding service of a cloud service broker according to the embodiment of the disclosure;
Fig. 12 illustrates a permutation service function diagram of a cloud service broker according to the embodiment of the disclosure;
Fig. 13 illustrates a flow chart of a specific service logic execution embodiment of permutation service of a cloud service broker according to the embodiment of the disclosure;
Fig. 14 illustrates a synthesis service function diagram of a cloud service broker according to the embodiment of the disclosure;
Fig. 15 illustrates a flow chart of a specific service logic execution embodiment of synthesis service of a cloud service broker according to the embodiment of the disclosure;
Fig. 16 illustrates a flow chart of an abstract service logic execution embodiment of synthesis service of a cloud service broker according to the embodiment of the disclosure; and
Fig. 17 illustrates a structure block diagram of a cloud system according to the embodiment of the disclosure.

### Detailed Description of the Embodiments

The disclosure will be described in detail below with reference to drawings and embodiments. It should be noted that the embodiments in the application and features in the embodiments may be combined with each other if not conflicted.

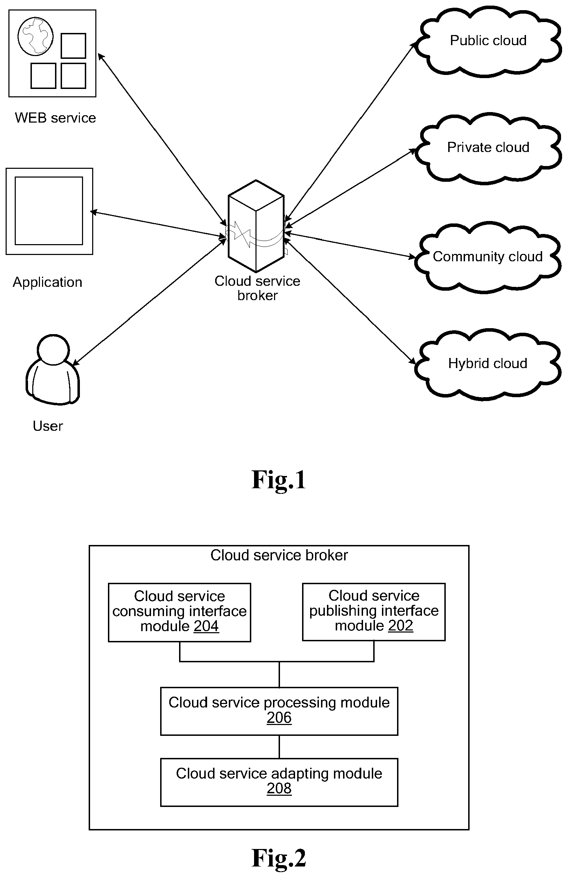

With reference to Fig. 1, a usage scenario diagram of a cloud service broker (or called cloud service gateway) according to the embodiment of the disclosure is illustrated. The cloud service broker is positioned between cloud service requesters and cloud service providers. Cloud service requesters such as WEB service, application and user (enterprise user and individual consumer) may access cloud services (cloud computing services and/or resources) of cloud service providers, such as private cloud, community cloud, public cloud and hybrid cloud, through the cloud service broker. In the above, the hybrid cloud is formed of two or more than two clouds (private cloud, community cloud or public cloud), and the cloud service broker may integrate data, application, user ID and security among clouds to implement the hybrid cloud.

The cloud service broker provides brokering services for various cloud service providers. The clouds provided by the cloud service providers may be private cloud, community cloud, public cloud and hybrid cloud. The cloud service broker may provide services, including but not limited to arbitration service, proxy service, monitoring service, transition service, porting service, control service, deployment service, shielding service, permutation service, security service and synthesis service or the like, between a plurality of cloud service providers (cloud computing service providers), such as private cloud, community cloud, public cloud and hybrid cloud, and cloud service requesters (consumers), such as WEB service, application and user (enterprise user and individual consumer). The cloud service broker can abstract the incompatible capabilities and interfaces between different cloud computing services, so as to provide public, open and standard brokering services for consumers. This solution can solve the problem of incompatibility between different cloud platforms/cloud computing services, provide optimal one-stop services for consumers, and fully meet the demands of consumers.

The cloud service broker may form alliances of various clouds, combine or integrate cloud services of various cloud service providers, access domains of a plurality of clouds, and provide cloud computing services and/or resources meeting SLA for cloud service requesters.

The cloud service broker can be a gateway for the cloud service requester (enterprise or individual consumer) to access cloud computing services and/or resources. It can be that the cloud service broker itself is not a cloud computing platform, and also can be that the cloud service broker is implemented by the cloud computing technology. The cloud service broker provider operating the cloud service broker can implement virtual cloud computing provider services through the cloud service broker.

With reference to Fig. 2, a system structure diagram of a cloud service broker according to the embodiment of the disclosure is illustrated, comprising: a cloud service publishing interface module 202, a cloud service consuming interface module 204, a cloud service processing module 206, and a cloud service adapting module 208.

The cloud service publishing interface module 202 (Cloud Service Publish Interface) is configured to subscribe to information of cloud computing services and/or resources provided by a plurality of cloud service providers. Specifically, the cloud service publishing interface module 202 is responsible for providing information of cloud computing services and/or resources of various external cloud service providers for the cloud service broker. Through the cloud service publishing interface module 202, the cloud service broker may subscribe to information of the cloud computing services and/or resources published and supported by the cloud service providers such as private cloud, community cloud, public cloud and hybrid cloud. The cloud service providers such as private cloud, community cloud, public cloud and hybrid cloud can publish and notify the cloud service broker with information of the supported cloud computing services and/or resources.

Preferably, the cloud service subscription/notification of the cloud service broker can be performed synchronously with the cloud service consumer request. In the dynamic synthesis service mode, after the cloud service broker receives a cloud service consumer request, according to the abstract service logic, an actual and specific service is first subscribed to through the cloud service publishing interface module 202, and then the abstract service logic is converted into specific service logic, and finally the specific service logic is executed.

In addition, the cloud service subscription/notification of the cloud service broker can be performed asynchronously with other operations of the cloud service broker. Through the cloud service publishing interface module 202, the cloud service broker can regularly, according to demand, subscribe to and receive information of the cloud computing services and/or resources published and supported by the cloud service providers such as private cloud, community cloud, public cloud and hybrid cloud.

The cloud service consuming interface module 204 (Cloud Service Consumer Interface) is configured to provide a consuming interface for a cloud service requester to access the cloud service provider. Specifically, the cloud service consuming interface module 204 is configured to receive a cloud service consumer request of the cloud service requester such as WEB service, application and user (enterprise user and individual consumer), return a cloud service consumer response to the cloud service requester, and provide an interface for the cloud service requester to access the cloud computing services and/or resources of the cloud service provider. Through the cloud service consuming interface module 204, the cloud service requester can access the cloud computing services and/or resources of cloud service providers such as private cloud, community cloud, public cloud and hybrid cloud.

The cloud service processing module 206 is configured to process a cloud service consumer request of the cloud service requester. Specifically, the cloud service processing module 206 is configured to receive a cloud service consumer request of the cloud service requester through the cloud service consuming interface module 204, parse the cloud service requested to consume from the cloud service consumer request, select the proper cloud computing services and/or resources and/or related function modes according to the cloud service information (it may be information of cloud computing services and/or resources obtained through the subscription through the cloud service publishing interface module 202, and may also be the composite cloud services synthesized by the cloud service broker) stored in the catalogue database, execute the cloud service operation, determine the corresponding cloud service provider, call the cloud service adapting module 208 to protocol adapt or call the cloud computing services and/or resources of the cloud service provider, send a cloud service adapting request to the related cloud service provider, and receive a cloud service adapting response returned by the cloud service provider.

The basic working mode of the cloud service processing module 206 is conversion/translation mode. That is, the cloud service processing module converts or translates the cloud service consumer request of the cloud service requester into a cloud service adapting request that can be received and operated by the cloud service provider, and converts or translates the cloud service adapting response returned by the cloud service provider into a cloud service consumer response. On this basis, the cloud service processing module 206 may provide at least one of the following service function modes: proxy service, security service, QoS/SLA control service, shielding service, permutation service, synthesis service and the like.

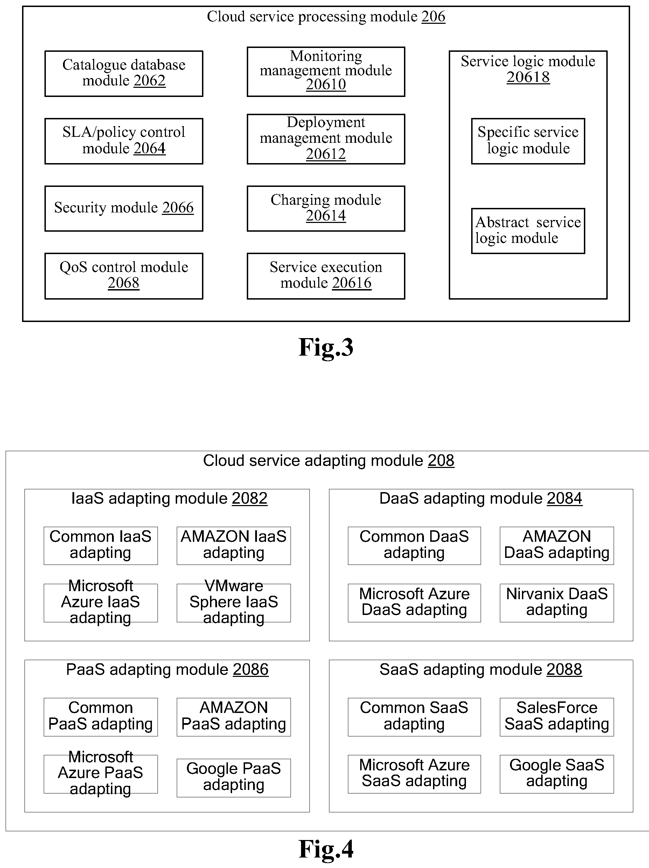

Preferably, the cloud service processing module 206 can comprise a catalogue database module 2062, a SLA/policy control module 2064, a security module 2066, a QoS control module 2068, a monitoring management module 20610, a deployment management module 20612, a charging module 20614, a service execution module 20616 and a service logic module 20618, as shown in Fig. 3. In the above, the service logic module 20618 can further comprise a specific service logic module and an abstract service logic module. Through different modules, a uniform and transparent cloud service access interface is provided for the cloud service requester to meet different demands.

The above modules will be described in detail below.

The catalogue database module 2062 is configured to store information of cloud computing services and/or resources. Specifically, the information of cloud computing services and/or resources may be information of cloud computing services and/or resources published and notified to the cloud service broker by cloud service providers such as private cloud, community cloud, public cloud and hybrid cloud through the cloud service publishing interface module 202, and also may be information of cloud computing services and/or resources of the composite cloud services synthesized by the cloud service broker. The catalogue database module 2062 can store information of cloud computing services and/or resources according to the type of services, such as IaaS information, DaaS information, PaaS information, SaaS or the like. The catalogue database module 2062 also can store information of cloud computing services and/or resources according to the type of cloud service providers, such as Amazon, Microsoft Windows Azure, Google, IBM, SalesForce or the like. The catalogue database module 2062 also can store information of cloud computing services and/or resources according to the type of both cloud service providers and services thereof, such as IaaS (Amazon Elastic Compute Cloud, Amazon Elastic MapReduce), DaaS (Amazon Simple Storage Service, Amazon Elastic Block Storage), PaaS (Google BigTable, Google AppEngine), and SaaS (Microsoft Online Service).

The SLA/policy control module 2064 is configured to set SLA management and/or control policies for various cloud computing services and/or resources, including service-levels, control parameters and parameter values, according to various contexts (bottom layer network, service capabilities, user demands, policies, preferences or the like).

The security module 2066 is configured to provide security services for various cloud computing services and/or resources, to implement the security service function of the cloud service broker and guarantee the security mechanisms between the cloud service provider and the cloud service requester. Specifically, the cloud service broker needs to guarantee the confidentiality, integrity and availability of the cloud computing services and/or resources, and needs to provide mechanisms, such as certification, authentication, authorization, Transport Layer Security (TLS), Internet Protocol Security (IPSec), application layer security, certificates, digital signatures, firewalls, and intrusion detection.

The QoS control module 2068 is configured to provide QoS control and Quality of Experience (QoE) control for various cloud computing services and/or resources, and process different cloud services according to different quality demands, which specifically includes: QoS and QoE parameter presetting, service assurances, QoS and QoE monitoring, evaluation and optimization.

The monitoring management module 20610 is configured to sample the running condition of various cloud computing services and/or resources, alarm various sampling information, and control the system, so as to implement the monitoring/control service of the cloud service broker.

The deployment management module 20612 is configured to configure various cloud computing services and/or resources subscribed to successfully by the cloud service broker in combination with various service function modes provided by the cloud service broker, so as to implement the deployment service of the cloud service broker.

The charging module 20614 is configured to execute the charging function for various cloud computing services and/or resources, including charging for basic cloud computing services and/or resources and charging for synthesis cloud computing services and/or resources.

The service execution module 20616 is configured to select proper cloud computing services and/or resources and/or related service logic and function modes according to the cloud service requested to consume in the cloud service consumer request, and execute the cloud service operation. In a case of specific service logic, including service function modes (security, proxy, QoS/SLA control, shielding, permutation, synthesis or the like), flows, control information and methods, the specific service logic is executed. That is, the related cloud service resource information in the catalogue database, specific functions of other modules in the cloud service processing module and the related service operations are called according to the service function modes, flows, control information and methods, and adapting or calling (including API functions, parameters, transport protocol or the like) is executed through request of the cloud service adapting module to the specific service. In a case of abstract service logic, that is, instead of a specific service the service is the abstract of a specific service, the cloud service broker first subscribes to an actual and specific service through the cloud service publishing interface module 202, then converts the abstract service logic into specific service logic, and finally executes the specific service logic.

The service logic module 20618 is configured to store a cloud service logic including specific service logic, abstract service logic and the service function modes thereof (security, proxy, Qos/SLA control, shielding, permutation, synthesis or the like), service execution flows, control information and methods. An abstract service means that instead of a specific service, the service is the abstract of a specific service.

The cloud service adapting module 208 is configured to adapt or call cloud services provided by the cloud service provider according to the cloud service consumer request. Specifically, the cloud service adapting module 208 is configured to protocol adapt or call cloud computing services and/or resources of the cloud service provider, including API functions, parameters, transport protocols or the like.

Preferably, as shown in Fig. 4, the cloud service adapting module 208 can comprise an IaaS adapting module 2082, a DaaS adapting module 2084, a PaaS adapting module 2086, and a cloud computing SaaS adapting module 2088. The IaaS adapting module 2082 comprises a common IaaS adapting module and other dedicated IaaS adapting modules (such as AMAZON IaaS adapting module, Microsoft Azure IaaS adapting module, VMware vSphere laaS adapting module or the like). The DaaS adapting module 2084 comprises a common DaaS adapting module and other dedicated DaaS adapting modules (such as AMAZON DaaS adapting module, Microsoft Azure DaaS adapting module, Nirvanix DaaS adapting module or the like). The PaaS adapting module 2086 comprises a common PaaS adapting module and other dedicated PaaS adapting modules (such as AMAZON PaaS adapting module, Microsoft Azure PaaS adapting module, Google DaaS adapting module or the like). The SaaS adapting module 2088 comprises a common SaaS adapting module and other dedicated SaaS adapting modules (such as SalesForce SaaS adapting module, Microsoft Azure SaaS adapting module, Google SaaS adapting module or the like).

Preferably, the common IaaS adapting module supports one or more of the following protocol adaptations: OVF of the DMTF, OCCI of the OGF or the like, so as to improve the compatibility.

Preferably, the dedicated laaS adapting modules, such as AMAZON laaS adapting module, can comprise its special information, such as specific adaptation information contents of Amazon Elastic Compute Cloud, Amazon Elastic MapReduce, Elastic Load Balancing, Amazon Virtual Private Cloud or the like.

Preferably, the common DaaS adapting module supports one or more of the following protocol adaptations: CDMI of the SNIA or the like, so as to improve the compatibility.

Preferably, the dedicated DaaS adapting modules, such as AMAZON DaaS adapting module, can comprise its special information, such as specific adaptation information contents of Amazon Simple Storage Service, Amazon Elastic Block Storage or the like.

Preferably, the dedicated PaaS adapting modules, such as AMAZON PaaS adapting module, can comprise its special information, such as specific adaptation information contents of Amazon SimpleDB, Amazon Relational Database Service, Amazon Simple Queue Service or the like.

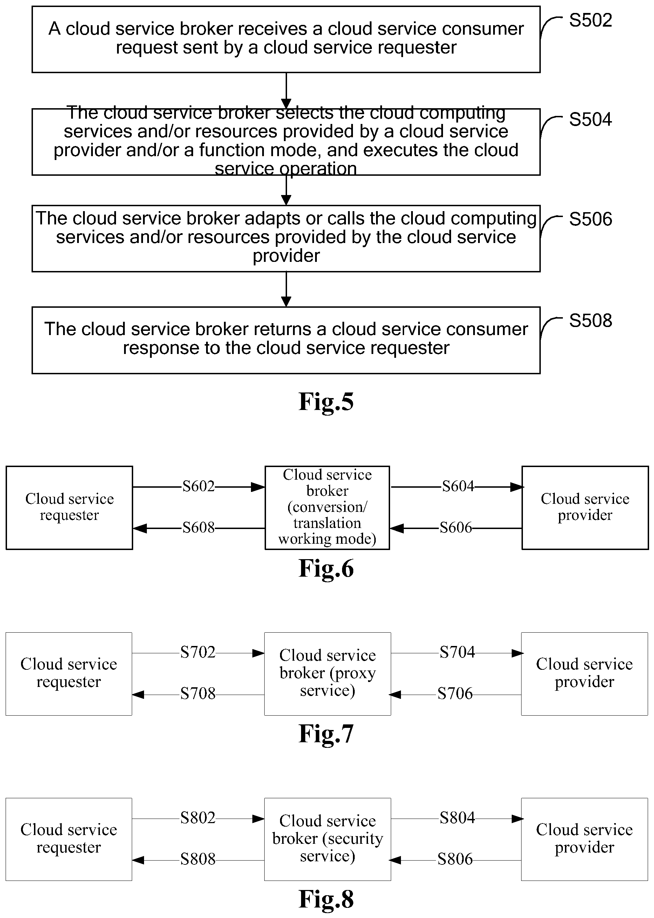

With reference to Fig. 5, a step flow chart of a cloud computing method according to the embodiment of the disclosure is illustrated, comprising the following steps.

S502: A cloud service broker receives a cloud service consumer request sent by a cloud service requester.

S504: The cloud service broker selects cloud computing services and/or resources provided by a cloud service provider and/or a function mode, and executes the cloud service operation.

In the above, the function modes can comprise at least one of the following services: proxy service, security service, QoS/SLA control service, shielding service, permutation service, and synthesis service.

S506: The cloud service broker adapts or calls the cloud computing services and/or resources provided by the cloud service provider.

In this step, the cloud service broker sends a cloud service adapting request to the related cloud service provider and receives a cloud service adapting response returned by the cloud service provider.

S508: The cloud service broker returns a cloud service consumer response to the cloud service requester.

In the related technologies, due to the incompatibility between different cloud computing services, it is necessary to establish interfaces and platforms for different cloud services when a consumer (cloud service requester) uses cloud services. As a result, the usages is inconvenient, the system resources are wasted, and the system efficiency is low. In this embodiment, through the establishment of a uniform cloud service broker, a cloud service requester uses different cloud services regardless of the difference between the cloud services. That is, the difference in the implementation of bottom layer of cloud services is shielded, and a uniform access interface and platform are provided for cloud service requesters. Therefore, it is convenient for cloud service requesters to use cloud services, the system resources are saved and the system efficiency is improved.

The main function of the cloud service broker is to provide brokering services between cloud service requesters and cloud service providers, and to control the corresponding interaction sequences. The basic working mode of the cloud service broker is conversion/translation mode. That is, the cloud service broker converts or translates the cloud service consumer request of the cloud service requester into a cloud service adapting request that can be received and operated by the cloud service provider, and converts or translates the cloud service adapting response returned by the cloud service provider into a cloud service consumer response. On this basis, the cloud service broker may provide at least one of the following service function modes: proxy service, security service, QoS/SLA control service, shielding service, permutation service, and synthesis service.

With reference to Fig. 6, a conversion/translation working mode diagram of a cloud service broker according to the embodiment of the disclosure is illustrated.

In the embodiment, the basic working mode of the cloud service broker is to provide conversion or translation between a plurality of cloud service providers (cloud computing service providers), such as private cloud, community cloud, public cloud and hybrid cloud, and cloud service requesters (consumers) such as WEB service, application and user (enterprise user and individual consumer). That is, the cloud service consumer request of the cloud service requester is converted or translated into a cloud service adapting request that can be received and operated by the cloud service provider, and the cloud service adapting response returned by the cloud service provider is converted or translated into a cloud service consumer response.

Specifically, the following steps are included:
S602: A cloud service requester sends a cloud service consumer request to a cloud service broker;
S604: The cloud service broker selects proper cloud computing services and resources and function modes according to the cloud service consumer request, executes the cloud service operation, converts the cloud service consumer request into a cloud service adapting request complying with the protocol used by the selected cloud service provider, and then sends the cloud service adapting request to the cloud service provider;
S606: After receiving the cloud service adapting request, the cloud service provider determines that it can provide the requested cloud service, and sends a cloud service adapting response to the cloud service broker; and
S608: After receiving the cloud service adapting response from the cloud service provider, the cloud service broker converts the cloud service adapting response into a cloud service consumer response, and sends the cloud service consumer response to the cloud service requester.

With reference to Fig. 7, a proxy service function diagram of a cloud service broker according to the embodiment of the disclosure is illustrated.

In the embodiment, the cloud service broker can provide proxy service or arbitration service between a plurality of cloud service providers (cloud computing service providers), such as private cloud, community cloud, public cloud and hybrid cloud, and cloud service requesters (consumers) such as WEB service, application and user (enterprise user and individual consumer). The cloud service broker serves as the proxy server between cloud service providers and cloud service requesters.

Specifically, the following steps are included:
S702: A cloud service requester sends a cloud service consumer request to a cloud service broker;
S704: The cloud service broker selects proper cloud computing services and resources and function modes according to the cloud service consumer request, sets the function mode as the proxy service function mode, executes the proxy service function operation of the related cloud service, converts the cloud service consumer request into a cloud service adapting request complying with the protocol used by the selected cloud service provider, and then sends the cloud service adapting request to the cloud service provider;
S706: After receiving the cloud service adapting request, the cloud service provider determines that it can provide the requested cloud service, and sends a cloud service adapting response to the cloud service broker; and
S708: After receiving the cloud service adapting response from the cloud service provider, the cloud service broker converts the cloud service adapting response into a cloud service consumer response, and sends the cloud service consumer response to the cloud service requester.

During the whole service, the cloud service broker serves as the proxy server between cloud service providers and cloud service requesters.

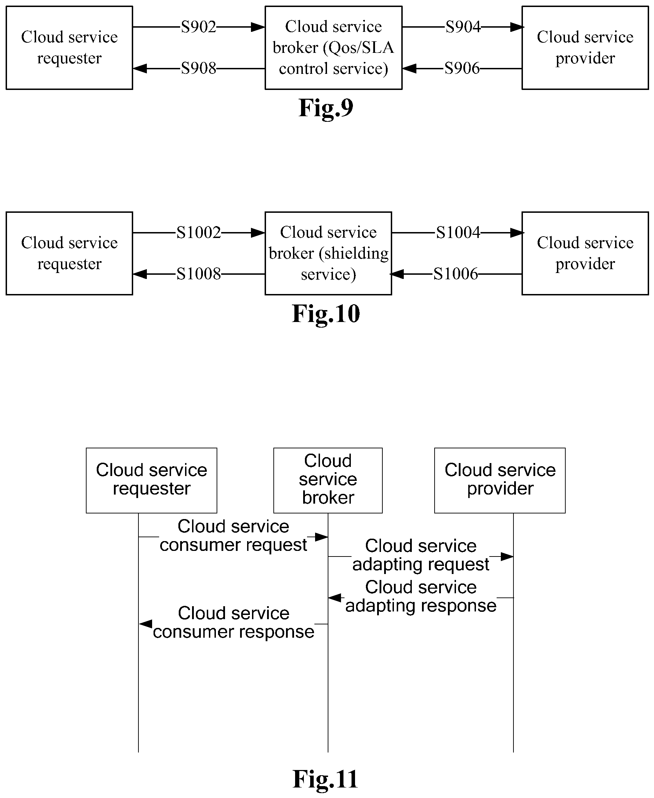

The execution flow of the specific service logic of the proxy service function in this embodiment can be the flow chart illustrated in Fig. 11.

With reference to Fig. 8, a security service function diagram of a cloud service broker according to the embodiment of the disclosure is illustrated.

In the embodiment, the cloud service broker may provide security service between a plurality of cloud service providers (cloud computing service providers), such as private cloud, community cloud, public cloud and hybrid cloud, and cloud service requesters (consumers) such as WEB service, application and user (enterprise user and individual consumer), so as to guarantee the security mechanisms between cloud service providers and cloud service requesters. Specifically, the cloud service broker needs to guarantee the confidentiality, integrity and availability of the cloud services, and needs to provide mechanisms, such as certification, authentication, authorization, TLS, IPSec, application layer security, certificates, digital signatures, firewalls, and intrusion detection.

S802: A cloud service requester sends a cloud service consumer request to a cloud service broker.

S804: The cloud service broker selects proper cloud computing services and resources and function modes according to the cloud service consumer request, sets the function mode as the security service function mode, executes the security service function operation of the related cloud service through security module 2066, converts the cloud service consumer request into a cloud service adapting request complying with the protocol used by the selected cloud service provider, and then sends the cloud service adapting request to the cloud service provider.

During this process, the cloud service broker can perform security control for the cloud service consumer request of the cloud service requester, such as security certification.

S806: After receiving the cloud service adapting request, the cloud service provider determines that it can provide the requested cloud service, and sends a cloud service adapting response to the cloud service broker.

S808: After receiving the cloud service adapting response from the cloud service provider, the cloud service broker converts the cloud service adapting response into a cloud service consumer response, and sends the cloud service consumer response to the cloud service requester.

During the whole service, when the cloud service requester uses the cloud service provided by the cloud service provider, security control is performed by the cloud service broker.

The execution flow of the specific service logic of the security service function in this embodiment can be the flow chart illustrated in Fig. 11.

With reference to Fig. 9, a QoS/SLA control service function diagram of a cloud service broker according to the embodiment of the disclosure is illustrated.

In the embodiment, the cloud service broker can provide QoS/SLA control service between a plurality of cloud service providers (cloud computing service providers), such as private cloud, community cloud, public cloud and hybrid cloud, and cloud service requesters (consumers) such as WEB service, application and user (enterprise user and individual consumer), so as to guarantee the quality of the cloud services or to implement cloud services in different levels according to the SLA. According to the QoS/SLA demands of the cloud service requester, the cloud service broker selects the cloud services and/or resources of the most proper cloud service provider according to factors such as policy, user preference, equipment environment and network status.

Specifically, the following steps are included.

S902: A cloud service requester sends a cloud service consumer request to a cloud service broker.

S904: The cloud service broker selects proper cloud computing services and resources and function modes according to the cloud service consumer request, sets the function mode as the QoS/SLA control service function mode, executes the QoS/SLA control service function operation of the related cloud service through the SLA/policy control module 2064 and the QoS control module 2068, converts the cloud service consumer request into a cloud service adapting request complying with the protocol used by the selected cloud service provider, and then sends the cloud service adapting request to the cloud service provider.

In this step, according to the demands of the cloud service requester, the cloud service broker selects the cloud services of the most proper cloud service provider according to the preset QoS/SLA control information including factors such as policy, user preference, equipment environment and network status. For example, the cloud service broker can provide a command function or WEB service command interface to access the SLA/policy control module 2064 and the QoS control module 2068 to set the QoS/SLA control information. Similarly, other service processing modules in the cloud service broker also can employ similar processing.

S906: After receiving the cloud service adapting request, the cloud service provider determines that it can provide the requested cloud service, and sends a cloud service adapting response to the cloud service broker.

S908: After receiving the cloud service adapting response from the cloud service provider, the cloud service broker converts the cloud service adapting response into a cloud service consumer response, and sends the cloud service consumer response to the cloud service requester.

The execution flow of the specific service logic of the QoS/SLA control service function in this embodiment can be the flow chart illustrated in Fig. 11.

With reference to Fig. 10, a shielding service function diagram of a cloud service broker according to the embodiment of the disclosure is illustrated.

In the embodiment, the cloud service broker can provide shielding service between a plurality of cloud service providers (cloud computing service providers), such as private cloud, community cloud, public cloud and hybrid cloud, and cloud service requesters (consumers) such as WEB service, application and user (enterprise user and individual consumer). The cloud service broker can provide cloud service/cloud resource contents in different levels and different types for cloud service requesters according to the shielding rules, can shield illegal requests of cloud service requesters, can filter some cloud service/cloud resource contents, and also can provide specific cloud service/cloud resource contents for some cloud service requesters at specific time, or the like.

S1002: A cloud service requester sends a cloud service consumer request to a cloud service broker.

S1004: The cloud service broker selects proper cloud computing services and resources and function modes according to the cloud service consumer request, sets the function mode as the shielding service function mode, executes the shielding service function operation of the related cloud service according to the shielding rules, converts the cloud service consumer request into a cloud service adapting request complying with the protocol used by the selected cloud service provider, and then sends the cloud service adapting request to the cloud service provider.

In this step, the cloud service broker can provide cloud service/cloud resource contents in different levels and different types for cloud service requesters according to the shielding rules, can shield illegal requests of cloud service requesters, can filter some cloud service/cloud resource contents, and also can provide specific cloud service/cloud resource contents for some cloud service requesters at specific time, or the like.

S1006: After receiving the cloud service adapting request, the cloud service provider determines that it can provide the requested cloud service, and sends a cloud service adapting response to the cloud service broker.

S1008: After receiving the cloud service adapting response from the cloud service provider, the cloud service broker converts the cloud service adapting response into a cloud service consumer response, and sends the cloud service consumer response to the cloud service requester.

The execution flow of the specific service logic of the shielding service function in this embodiment can be the flow chart illustrated in Fig. 11.

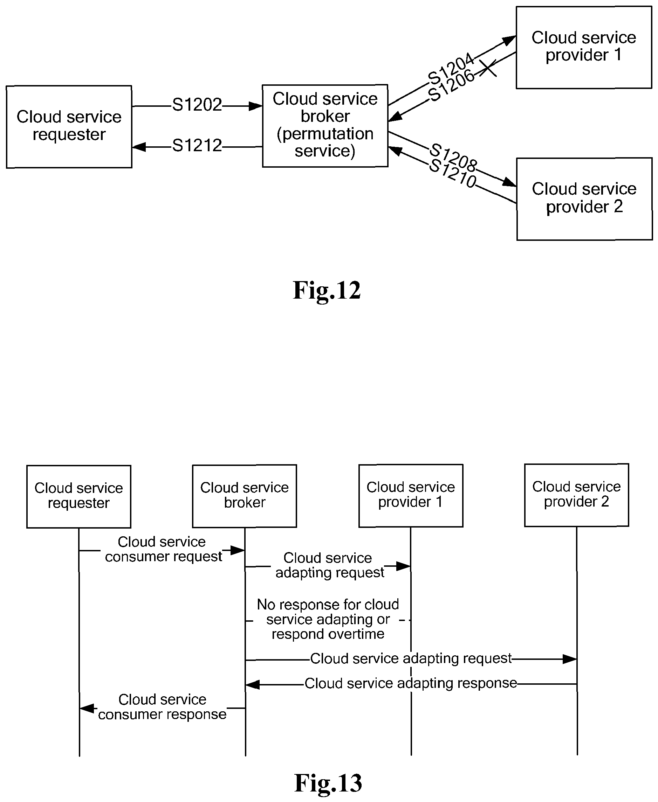

With reference to Fig. 12, a permutation service function diagram of a cloud service broker according to the embodiment of the disclosure is illustrated.

In the embodiment, the cloud service broker can provide permutation service between a plurality of cloud service providers (cloud computing service providers), such as private cloud, community cloud, public cloud and hybrid cloud, and cloud service requesters (consumers) such as WEB service, application and user (enterprise user and individual consumer). When some cloud service providers do not return a response to the cloud service broker or the response is timeout, the cloud service broker can select substitute cloud service providers to continue to provide services for cloud service requesters.

S1202: A cloud service requester sends a cloud service consumer request to a cloud service broker.

S1204: The cloud service broker selects proper cloud computing services and resources and function modes according to the cloud service consumer request, sets the function mode as the permutation service function mode, and first selects cloud service provider 1, converts the cloud service consumer request into a cloud service adapting request complying with the protocol used by cloud service provider 1, and then sends the cloud service adapting request to cloud service provider 1.

S1206: The cloud service broker does not receive a cloud service adapting response from cloud service provider 1 or the response of cloud service provider 1 is timeout.

S1208: As the current function mode is the permutation service function mode, the cloud service broker continues to select cloud service provider 2 for the cloud service requester, converts the cloud service consumer request into a cloud service adapting request complying with the protocol used by cloud service provider 2, and then sends the cloud service adapting request to cloud service provider 2.

S1210: After receiving the cloud service adapting request, cloud service provider 2 determines that it can provide the requested cloud service, and sends a cloud service adapting response to the cloud service broker.

S1212: After receiving the cloud service adapting response of cloud service provider 2, the cloud service broker converts the cloud service adapting response into a cloud service consumer response, and sends the cloud service consumer response to the cloud service requester.

The execution flow of the specific service logic of the permutation service function in this embodiment can be the flow chart illustrated in Fig. 13.

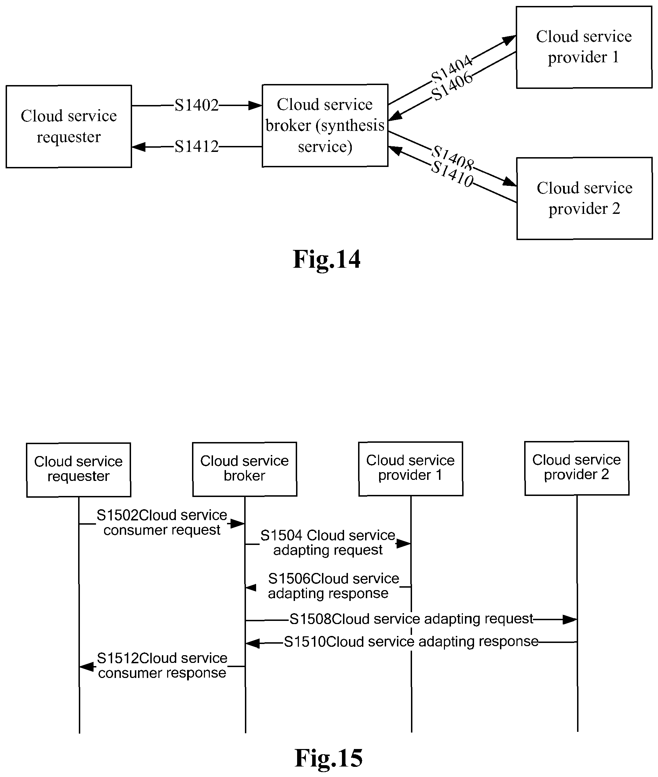

With reference to Fig. 14, a synthesis service function diagram of a cloud service broker according to the embodiment of the disclosure is illustrated.

In the embodiment, the cloud service broker can provide synthesis service between a plurality of cloud service providers (cloud computing service providers), such as private cloud, community cloud, public cloud and hybrid cloud, and cloud service requesters (consumers) such as WEB service, application and user (enterprise user and individual consumer). The cloud service broker can provide a plurality of composite cloud services and/or resource for cloud service requesters. The synthesis service comprises static synthesis services and dynamic synthesis services. The static synthesis services are executed by specific service logic according to specific service combinations, resource data, flows, control information and methods. The dynamic synthesis services are executed by abstract service logic. The cloud service broker first subscribes to an actual and specific service through the cloud service publishing interface module, then converts the abstract service logic into specific service logic, and finally executes the specific service logic.

S1402: A cloud service requester sends a cloud service consumer request to a cloud service broker.

S1404: The cloud service broker selects proper cloud computing services and resources and function modes according to the cloud service consumer request, sets the function mode as the synthesis service function mode, executes the synthesis service function operation of the related cloud service, selects a plurality of cloud service providers, such as cloud service provider 1 and cloud service provider 2, for the cloud service requester, converts the cloud service consumer request into a cloud service adapting request complying with the protocols used by cloud service provider 1 and cloud service provider 2 respectively, and first sends the cloud service adapting request to cloud service provider 1 (it can also send the cloud service adapting request to cloud service provider 2 first).

S1406: The cloud service broker receives a cloud service adapting response returned by cloud service provider 1.

S1408: The cloud service broker sends a cloud service consumer request to cloud service provider 2.

S1410: The cloud service broker receives a cloud service adapting response returned by cloud service provider 2.

It should be noted that the sequence of S1404 and S1408 is determined by the service logic.

S1412: After receiving the cloud service adapting responses from cloud service provider 1 and cloud service provider 2, the cloud service broker converts the cloud service adapting responses into cloud service consumer responses, and sends the cloud service consumer responses to the cloud service requester.

With reference to Fig. 15, a flow chart of a specific service logic execution embodiment of synthesis service function of a cloud service broker according to the embodiment of the disclosure is illustrated, comprising the following steps.

S1502: A cloud service requester sends a cloud service consumer request to a cloud service broker.

S1504: The cloud service broker sends cloud service adapting request 1 to cloud service provider 1.

S1506: The cloud service provider 1 returns cloud service adapting response 1 to the cloud service broker.

S1508: The cloud service broker sends cloud service adapting request 2 to cloud service provider 2.

S1510: The cloud service provider 2 returns cloud service adapting response 2 to the cloud service broker.

S1512: The cloud service broker returns a cloud service consumer response to the cloud service requester.

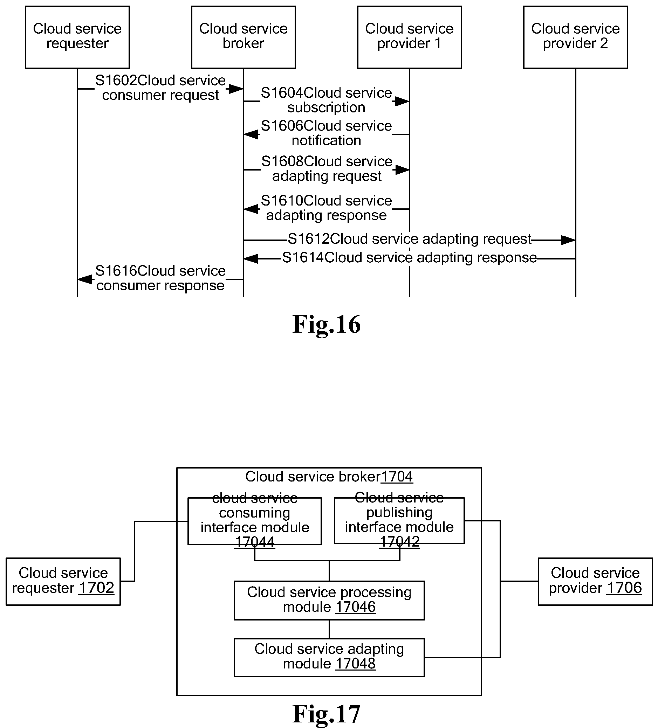

With reference to Fig. 16, a flow chart of an abstract service logic execution embodiment of synthesis service of a cloud service broker according to the embodiment of the disclosure is illustrated, comprising the following steps.

S1602: A cloud service requester sends a cloud service consumer request to a cloud service broker.

S1604: Composite service 1 in the synthesis service is an abstract service, and the cloud service broker sends a cloud service subscription request to cloud service provider 1.

S1606: Cloud service provider 1 notifies the cloud service broker with its cloud services and/or resources.

S1608: The cloud service broker sends cloud service adapting request 1 to cloud service provider 1.

S1610: Cloud service provider 1 returns cloud service adapting response 1 to the cloud service broker.

S1612: Composite service 2 in the synthesis service is a specific service, and the cloud service broker sends cloud service adapting request 2 to cloud service provider 2.

S1614: Cloud service provider 2 returns cloud service adapting response 2 to the cloud service broker.

S1616: The cloud service broker returns a cloud service consumer response to the cloud service requester.

Further, in combination with one or more of the above service functions, the cloud service broker provider operating the cloud service broker may implement virtual cloud service provider service through the cloud service broker. For instance, the cloud service broker can provide cloud backup service, cloud yellow page service, cloud synthesis service or the like.

With reference to Fig. 17, a structure block diagram of a cloud system according to the embodiment of the disclosure is illustrated, comprising: a cloud service requester 1702, a cloud service broker 1704 and a cloud service provider 1706.

In the above, the cloud service requester 1702 is configured to send a cloud service consumer request to the cloud service broker 1704, receive a cloud service consumer response from the cloud service broker 1704, and use the interface provided by the cloud service broker 1704 to access the cloud service of the cloud service provider 1706.

In the above, the cloud service broker 1704 is configured to subscribe to cloud service information of a plurality of cloud service providers 1706, provide a consuming interface for the cloud service requester 1702 to access the cloud service provider 1706, process a cloud service consumer request of the cloud service requester 1702, and adapt or call cloud computing services and/or resources provided by the cloud service provider 1706.

In the above, the cloud service provider 1706 is configured to receive a cloud service adapting request of the cloud service broker 1704, return a cloud service adapting response to the cloud service broker 1704, and provide cloud computing services and/or resources to the cloud service requester 1702, and publish information of cloud computing services and/or resources to the cloud service broker 1704.

Preferably, the cloud service broker 1704 comprises: a cloud service publishing interface module 17042, a cloud service consuming interface module 17044, a cloud service processing module 17046 and a cloud service adapting module 17048.

In the above, the cloud service publishing interface module 17042 is configured to subscribe to cloud service information of a plurality of cloud service providers 1706; the cloud service consuming interface module 17044 is configured to provide a consuming interface for a cloud service requester 1702 to access the cloud service provider 1706; the cloud service processing module 17046 is configured to process a cloud service consumer request of the cloud service requester 1702; and the cloud service adapting module 17048 is configured to adapt or call, according to the cloud service consumer request, the cloud computing services and/or resources provided by the cloud service provider 1706.

Preferably, the cloud service publishing interface module 17042 is configured to subscribe to information of cloud computing services and/or resources published and supported by at least one of the following cloud service providers: private cloud, community cloud, public cloud and hybrid cloud; the cloud service consuming interface module 17044 is configured to receive a cloud service consumer request from at least one of the following cloud service requesters: WEB service, application and user, return a cloud service consumer response to the cloud service requester1702, and provide an interface for the cloud service requester 1702 to access the cloud computing services and/or resources of the cloud service provider 1706; the cloud service processing module 17046 is configured to receive a cloud service consumer request of the cloud service requester 1702 through the cloud service consuming interface module 17044, parse the cloud service requested to consume from the cloud service consumer request, select the cloud computing services and/or resources provided by the cloud service provider 1706 and/or a function mode, and execute the cloud service operation; and call the cloud service adapting module 17048 to protocol adapt or call the cloud computing services and/or resources of the cloud service provider 1706, send a cloud service adapting request to the cloud service provider 1706, and receive a cloud service adapting response returned by the cloud service provider 1706; and the cloud service adapting module 17048 is configured to protocol adapt or call the cloud computing services and/or resources provided by the cloud service provider 1702.

Of course, person skilled in the art should understand that the above modules or steps of the disclosure could be achieved through general calculating devices. They can be concentrated in a single calculating device or distributed in a network formed by multiple calculating devices. Optionally, they can be achieved by program codes that can be executed by calculating devices. Thus, they can be stored in storage devices to be executed by calculating devices. Under certain situation, the shown or described steps can be executed according to an order different from the above order, or they can be achieved by respectively making them into many integrated circuit modules or by making multiple modules or steps among them into a single integrated circuit module. In this way, the disclosure is not limited to combinations of any specific hardware and software.

Above contents are only preferred embodiments of the disclosure and should not be used for limiting the disclosure. For person skilled in the art, the disclosure may have various alternations and changes.

## Claims

1. A cloud service broker, comprising:
a cloud service publishing interface module (202), configured to subscribe to information of cloud computing services and/or resources published and supported by at least one cloud service provider of: private cloud, community cloud, public cloud and hybrid cloud;
a cloud service consuming interface module (204), configured to receive a cloud service consumer request of at least one cloud service requester of: WEB service, application and user, and return a cloud service consumer response to the cloud service requester;
a cloud service processing module (206), configured to parse a cloud service requested to consume from the cloud service consumer request, select the cloud computing services and/or resources provided by the cloud service provider and select a function mode provided by the cloud service processing module (206), and execute a cloud service operation according to the cloud service consumer request; and
a cloud service adapting module (208), configured to protocol adapt or call the cloud computing services and/or resources provided by the cloud service provider,
**characterized in that** the cloud service broker provides brokering services of at least one of permutation service and synthesis service,
wherein the permutation service provided by the cloud service broker is between the plurality of cloud service providers and cloud service requesters, and the permutation service is configured so that the cloud service broker selects one or more substitute cloud service providers to continue to provide services for cloud service requesters when one or more of the cloud service providers does not return a response to the cloud service broker or the response is timeout; and
the synthesis service provided by the cloud service broker is between the plurality of cloud service providers and cloud service requesters, and the synthesis service comprises at least one of: static synthesis service and dynamic synthesis service, the static synthesis service is executed by specific service logic, and the dynamic synthesis service is executed by abstract service logic.

2. The cloud service broker according to claim 1, **characterized in that** the cloud service broker further provides brokering services of at least one of: proxy service, control service, shielding service and security service, wherein:
the proxy service or arbitration service provided by the cloud service broker is between a plurality of cloud service providers and cloud service requesters, and the cloud service broker serves as a proxy server;
the control service provided by the cloud service broker is QoS/SLA control between the plurality of cloud service providers and cloud service requesters, and the cloud service broker selects cloud services and/or resources of most proper cloud service provider according to factors of at least one of: policy, user preference, equipment environment and network status;
the shielding service provided by the cloud service broker is between the plurality of cloud service providers and cloud service requesters, and the cloud service broker provides cloud service/cloud resource contents according to shielding rules of at least one of: shielding illegal requests of the cloud service requesters, filtering some cloud service/cloud resource contents, and providing specific cloud service/cloud resource contents for some cloud service requesters at specific time; and
the security service provided by the cloud service broker is between the plurality of cloud service providers and cloud service requesters, and the cloud service broker guarantees confidentiality, integrity and availability of cloud services, and provides mechanisms of at least one of certification, authentication, authorization, Transport Layer Security (TLS), Internet Protocol Security (IPSec), application layer security, certificates, digital signatures, firewalls, and intrusion detection.

3. The cloud service broker according to claim 1, **characterized in that** the cloud service processing module (206) comprises at least one of:
a catalogue database module (2062), configured to store the information of cloud computing services and/or resources;
a Service-level Agreement (SLA)/policy control module (2064), configured to set SLA management and/or control policies for various cloud computing services and/or resources;
a security module (2066), configured to provide security assurance for the cloud service requester to access a cloud service;
a Quality of Service (QoS) control module (2068), configured to provide a QoS control for the cloud service;
a monitoring management module (20610), configured to monitor a running status of the cloud service;
a deployment management module (20612), configured to combine service function modes of the cloud service broker to configure the cloud service subscribed to by the cloud service broker;
a charging module (20614), configured to charge the cloud service requester for accessing the cloud service;
a service execution module (20616), configured to select a cloud service and the related service logic and function mode according to the cloud service consumer request, and execute the cloud service operation; and
a service logic module (20618), configured to store a cloud service logic.

4. The cloud service broker according to claim 1, **characterized in that** the cloud service adapting module (208) comprises at least one of: a Infrastructure as a Service (IaaS) adapting module (2082), a Data Storage as a Service (DaaS) adapting module (2084), a Platform as a Service (PaaS) adapting module (2086), and a Software as a Service (SaaS) adapting module (2088);
the laaS adapting module (2082) comprises a common laaS adapting module and/or a dedicated laaS adapting module; the DaaS adapting module (2084) comprises a common DaaS adapting module and/or a dedicated DaaS adapting module; the PaaS (2086) adapting module comprises a common PaaS adapting module and/or a dedicated PaaS adapting module; the SaaS (2088) adapting module comprises a common SaaS adapting module and/or a dedicated SaaS adapting module;
the common laaS adapting module is configured to adapt at least one protocol of: Open Virtualization Format (OVF) of the Distributed Management Task Force (DMTF) and Open Cloud Computing Interface (OCCI) of the Open Grid Forum (OGF); and
the common DaaS adapting module is configured to adapt a Cloud Data Management Interface (CDMI) of Storage Networking Industry Association (SNIA).

5. The cloud service broker according to claim 3, **characterized in that** the catalogue database module (2062) stores the information of cloud computing services and/or resources according to type of services of at least one of: laaS information, DaaS information, PaaS information, and SaaS information, or type of cloud service providers, or the type of both the cloud service providers and the services.

6. A cloud computing method, comprising:
a cloud service broker providing brokering services for various cloud service providers,
**characterized in that** the cloud service broker provides the brokering services of at least one of: permutation service and synthesis service, between a plurality of cloud service providers of at least one of: private cloud, community cloud, public cloud, and hybrid cloud, and a plurality of cloud service requesters of at least one of: WEB service, application, and user,
wherein the permutation service provided by the cloud service broker is between the plurality of cloud service providers and cloud service requesters, and the permutation service is configured to that the cloud service broker selects one or more substitute cloud service providers to continue to provide services for cloud service requesters when one or more of the cloud service providers does not return a response to the cloud service broker or the response is timeout; and
the synthesis service provided by the cloud service broker is between the plurality of cloud service providers and cloud service requesters, and the synthesis service comprises at least one of: static synthesis service and dynamic synthesis service, the static synthesis service is executed by specific service logic, and the dynamic synthesis service is executed by abstract service logic.

7. The cloud computing method according to claim 6, **characterized in that**
the cloud service broker receiving a cloud service consumer request sent by a cloud service requester;
selecting cloud computing services and/or resources provided by a cloud service provider and/or a function mode, and executing a cloud service operation;
adapting or calling the cloud computing services and/or resources provided by the cloud service provider; and
returning a cloud service consumer response to the cloud service requester.

8. The cloud computing method according to claim 7, **characterized in that** when the function mode is the permutation service, before the step that the cloud service broker adapts the cloud computing services and/or resources provided by the cloud service provider, the method further comprises:
the cloud service broker not receiving a service adapting response from the selected cloud service provider within a set time;
the cloud service broker selecting other cloud service provider and sending the cloud service adapting request to said other cloud service provider; and
the cloud service broker receiving a service adapting response from said other cloud service provider.

9. The cloud computing method according to claim 7, **characterized in that** when the function mode is the synthesis service, before the step that the cloud service broker adapts the cloud computing services and/or resources provided by the cloud service provider, the method further comprises:
the cloud service broker respectively converting the cloud service consumer request into cloud service adapting requests complying with protocols used by the plurality of cloud service providers that provide cloud services, and respectively sending the cloud service adapting requests to the plurality of cloud service providers; and
the cloud service broker receiving a plurality of service adapting responses from the plurality of cloud service providers.

10. The cloud computing method according to claim 6, **characterized in that** the cloud service broker further provides the brokering services of at least one of proxy service, control service, shielding service and security service, wherein:
the proxy service or arbitration service provided by the cloud service broker is between the plurality of cloud service providers and cloud service requesters, and the cloud service broker serves as a proxy server;
the security service provided by the cloud service broker is between the plurality of cloud service providers and cloud service requesters, and the cloud service broker guarantees confidentiality, integrity and availability of cloud services, and provides mechanisms of at least one of certification, authentication, authorization, Transport Layer Security (TLS), Internet Protocol Security (IPSec), application layer security, certificates, digital signatures, firewalls, and intrusion detection;
the control service provided by the cloud service broker is Quality of Service (QoS)/ Service-level Agreement (SLA) control between the plurality of cloud service providers and cloud service requesters, and the cloud service broker selects cloud services and/or resources of most proper cloud service provider according to factors of at least one of: policy, user preference, equipment environment and network status; and
the shielding service provided by the cloud service broker is between the plurality of cloud service providers and cloud service requesters, and the cloud service broker provides cloud service/cloud resource contents according to shielding rules of at least one of: shielding illegal requests of the cloud service requesters, filtering some cloud service/cloud resource contents, and providing specific cloud service/cloud resource contents for some cloud service requesters at specific time.

11. A cloud system, comprising: a cloud service requester, a cloud service broker and a cloud service provider, wherein
the cloud service requester is configured to send a cloud service consumer request to the cloud service broker; receive a cloud service consumer response from the cloud service broker, and use an interface provided by the cloud service broker to access a cloud service of the cloud service provider;
the cloud service broker is configured to subscribe to cloud service information of a plurality of cloud service providers; provide a consuming interface for the cloud service requester to access the cloud service provider; process a cloud service consumer request of the cloud service requester; and adapt or call cloud computing services and/or resources provided by the cloud service provider; and
the cloud service provider is configured to receive a cloud service adapting request of the cloud service broker, return a cloud service adapting response to the cloud service broker, and provide cloud computing services and/or resources to the cloud service requester; and publish information of cloud computing services and/or resources to the cloud service broker,
**characterized in that** the cloud service broker provides brokering services of at least one of permutation service and synthesis service,
wherein the permutation service provided by the cloud service broker is between the plurality of cloud service providers and cloud service requesters, and the permutation service is configured to that the cloud service broker selects one or more substitute cloud service providers to continue to provide services for cloud service requesters when one or more of the cloud service providers does not return a response to the cloud service broker or the response is timeout; and
the synthesis service provided by the cloud service broker is between the plurality of cloud service providers and cloud service requesters, and the synthesis service comprises at least one of: static synthesis service and dynamic synthesis service, the static synthesis service is executed by specific service logic, and the dynamic synthesis service is executed by abstract service logic.

12. The cloud system according to claim 11 , **characterized in that** the cloud service broker comprises:
a cloud service publishing interface module (202), configured to subscribe to information of cloud computing services and/or resources published and supported by at least one cloud service provider of: private cloud, community cloud, public cloud and hybrid cloud;
a cloud service consuming interface module (204), configured to receive the cloud service consumer request from at least one cloud service requester of: WEB service, application and user, and return the cloud service consumer response to the cloud service requester;
a cloud service processing module (206), configured to parse the cloud service requested to consume from the cloud service consumer request, select the cloud computing services and/or resources provided by the cloud service provider and select a function mode provided by the cloud service processing module (206), and execute a cloud service operation according to the cloud service consumer request; and
a cloud service adapting module (208), configured to protocol adapt or call the cloud computing services and/or resources provided by the cloud service provider.

13. The cloud system according to claim 12, **characterized in that** the cloud service processing module (206) comprises at least one of:
a catalogue database module (2062), configured to store information of the cloud computing services and/or resources;
a Service-level Agreement (SLA)/policy control module (2064), configured to set SLA management and/or control policies for various cloud computing services and/or resources;
a security module (2066), configured to provide security assurance for the cloud service requester to access the cloud service;
a Quality of Service (QoS) control module (2068), configured to provide a QoS control for the cloud service;
a monitoring management module (20610), configured to monitor running status of the cloud service;
a deployment management module (20612), configured to combine service function modes of the cloud service broker to configure the cloud service subscribed to by the cloud service broker;
a charging module (20614), configured to charge the cloud service requester for accessing the cloud service;
a service execution module (20616), configured to select a cloud service and the related service logic and function mode according to the cloud service consumer request, and execute the cloud service operation; and
a service logic module (20618), configured to store a cloud service logic.

14. The cloud system according to claim 11, **characterized in that**
the cloud service broker further provides brokering services of at least one of: proxy service, control service, shielding service and security service, wherein:
the proxy service or arbitration service provided by the cloud service broker is between a plurality of cloud service providers and cloud service requesters, and the cloud service broker serves as a proxy server;
the control service provided by the cloud service broker is QoS/SLA control between the plurality of cloud service providers and cloud service requesters, and the cloud service broker selects cloud services and/or resources of most proper cloud service provider according to factors of at least one of: policy, user preference, equipment environment and network status;
the shielding service provided by the cloud service broker is between the plurality of cloud service providers and cloud service requesters, and the cloud service broker provides cloud service/cloud resource contents according to shielding rules of at least one of: shielding illegal requests of the cloud service requesters, filtering some cloud service/cloud resource contents, and providing specific cloud service/cloud resource contents for some cloud service requesters at specific time; and
the security service provided by the cloud service broker is between the plurality of cloud service providers and cloud service requesters, and the cloud service broker guarantees confidentiality, integrity and availability of cloud services, and provides mechanisms of at least one of certification, authentication, authorization, Transport Layer Security (TLS), Internet Protocol Security (IPSec), application layer security, certificates, digital signatures, firewalls, and intrusion detection.

## Patentansprüche

1. Cloud-Dienst-Vermittler, umfassend:
ein Cloud-Dienst-Veröffentlichungsschnittstellenmodul (202), das eingerichtet ist, um Informationen von Cloud-Computing-Diensten und/oder -Ressourcen zu abonnieren, die durch mindestens einen Cloud-Dienst-Anbieter von Private Cloud, Community Cloud, Public Cloud und Hybrid Cloud veröffentlicht und unterstützt werden;
ein Cloud-Dienste nutzendes Schnittstellenmodul (204), das eingerichtet ist, um eine Cloud-Dienst-Kundenanforderung von mindestens einem Cloud-Dienst-Anforderer von: WEB-Dienst, Anwendung und Benutzer zu empfangen, und eine Cloud-Dienst-Kundenantwort an den Cloud-Dienst-Anforderer zurückzugeben;
ein Cloud-Dienst-Verarbeitungsmodul (206), das eingerichtet ist, um einen zur Nutzung angeforderten Cloud-Dienst aus der Cloud-Dienst-Kundenanforderung zu analysieren, die Cloud-Computing-Dienste und/oder Ressourcen auszuwählen, die durch den Cloud-Dienst-Anbieter bereitgestellt werden, und einen durch das Cloud-Dienst-Verarbeitungsmodul (206) bereitgestellten Funktionsmodus auszuwählen und eine Cloud-Dienst-Operation gemäß der Cloud-Dienst-Kundenanforderung auszuführen; und
ein Cloud-Dienst-Anpassungsmodul (208), das eingerichtet ist, um die durch den Cloud-Dienst-Anbieter bereitgestellten Cloud-Computing-Dienste und/oder -Ressourcen im Protokoll anzupassen oder aufzurufen,
**dadurch gekennzeichnet, dass** der Cloud-Dienst-Vermittler Vermittlungsdienste aus mindestens einem aus Permutationsdienst und Synthesedienst bereitstellt,
wobei sich der durch den Cloud-Dienst-Vermittler bereitgestellte Permutationsdienst zwischen der Vielzahl von Cloud-Dienst-Anbietern und Cloud-Dienst-Anforderern befindet und der Permutationsdienst so eingerichtet ist, dass der Cloud-Dienst-Vermittler einen oder mehrere Ersatz-Cloud-Dienst-Anbieter auswählt, um weiterhin Dienste für Cloud-Dienst-Anforderer bereitzustellen, wenn einer oder mehrere der Cloud-Dienst-Anbieter keine Antwort an den Cloud-Dienst-Vermittler zurückgeben oder bei der Antwort eine Zeitüberschreitung aufgetreten ist; und
sich der durch den Cloud-Dienst-Vermittler bereitgestellte Synthesedienst zwischen der Vielzahl von Cloud-Dienst-Anbietern und Cloud-Dienst-Anforderern befindet und der Synthesedienst mindestens eines aus statischem Synthesedienst und dynamischem Synthesedienst umfasst, wobei der statische Synthesedienst durch eine spezielle Dienstlogik ausgeführt wird und der dynamische Synthesedienst durch eine abstrakte Dienstlogik ausgeführt wird.

2. Cloud-Dienst-Vermittler nach Anspruch 1, **dadurch gekennzeichnet, dass**
der Cloud-Dienst-Vermittler ferner Vermittlungsdienste für mindestens eines aus Proxy-Dienst, Steuerungsdienst, Abschirmdienst und Sicherheitsdienst bereitstellt, wobei:
sich der durch den Cloud-Dienst-Vermittler bereitgestellte Proxy-Dienst oder Entscheidungsdienst zwischen einer Vielzahl von Cloud-Dienst-Anbietern und Cloud-Dienst-Anforderern befindet und der Cloud-Dienst-Vermittler als Proxy-Server dient;
der durch den Cloud-Dienst-Vermittler bereitgestellte Steuerungsdienst eine QoS/SLA-Steuerung zwischen der Vielzahl von Cloud-Dienst-Anbietern und Cloud-Dienst-Anforderern ist und der Cloud-Dienst-Vermittler Cloud-Dienste und/oder -Ressourcen des am besten geeigneten Cloud-Dienst-Anbieters gemäß Faktoren von mindestens einem aus Richtlinie, Benutzervoreinstellung, Geräteumgebung und Netzwerkstatus auswählt;
sich der durch den Cloud-Dienst-Vermittler bereitgestellte Abschirmungsdienst zwischen der Vielzahl von Cloud-Dienst-Anbietern und Cloud-Dienst-Anforderern befindet und der Cloud-Dienst-Vermittler Cloud-Dienst-/Cloud-Ressourceninhalte gemäß den Abschirmungsregeln von mindestens einem aus Abschirmen unzulässiger Anforderungen von den Cloud Dienst-Anforderern, Filtern einiger Cloud-Dienst-/Cloud-Ressourceninhalte und Bereitstellen bestimmter Cloud-Dienst-/Cloud-Ressourceninhalte für einige Cloud-Dienst-Anforderer zu einem bestimmten Zeitpunkt bereitstellt; und
sich der durch den Cloud-Dienst-Vermittler bereitgestellte Sicherheitsdienst zwischen der Vielzahl von Cloud-Dienst-Anbietern und Cloud-Dienst-Anforderern befindet und der Cloud-Dienst-Vermittler Vertraulichkeit, Integrität und Verfügbarkeit von Cloud-Diensten garantiert und Mechanismen von mindestens einem aus Zertifizierung, Authentifizierung, Autorisierung, TLS (Transport Layer Security), IPSec (Internet Protocol Security), Sicherheit auf der Anwendungsschicht, Zertifikaten, digitalen Signaturen, Firewalls und Erkennung des Eindringens bereitstellt.

3. Cloud-Dienst-Vermittler nach Anspruch 1, **dadurch gekennzeichnet, dass** das Cloud-Dienst-Verarbeitungsmodul (206) mindestens eines umfasst aus:
einem Katalogdatenbankmodul (2062), das eingerichtet ist, um die Informationen von Cloud-Computing-Diensten und/oder -Ressourcen zu speichern;
einem Dienstleistungsvereinbarung(SLA)-Steuerungs-/Richtliniensteuerungsmodul (2064), das eingerichtet ist, um SLA-Verwaltungs- und/oder Steuerungsrichtlinien für verschiedene Cloud-Computing-Dienste und/oder -Ressourcen festzulegen;
einem Sicherheitsmodul (2066), das eingerichtet ist, um dem Cloud-Dienst-Anforderer eine Sicherheitszusicherung für den Zugriff auf einen Cloud-Dienst bereitzustellen;
einem Dienstqualitäts(QoS)-Steuerungsmodul (2068), das eingerichtet ist, um eine QoS-Steuerung für den Cloud-Dienst bereitzustellen;
einem Überwachungsverwaltungsmodul (20610), das eingerichtet ist, um einen laufenden Status des Cloud-Dienstes zu überwachen;
einem Bereitstellungsverwaltungsmodul (20612), das eingerichtet ist, um Dienstfunktionsmodi des Cloud-Dienst-Vermittlers zu kombinieren, um den durch den Cloud-Dienst-Vermittler abonnierten Cloud-Dienst zu konfigurieren;
einem Gebührenberechnungsmodul (20614), das eingerichtet ist, um dem Cloud-Dienst-Anforderer Gebühren für den Zugriff auf den Cloud-Dienst zu berechnen;
einem Dienstausführungsmodul (20616), das eingerichtet ist, um einen Cloud-Dienst und die zugehörige Dienstlogik und den zugehörigen Funktionsmodus gemäß der Cloud-Dienst-Kundenanforderung auszuwählen und die Cloud-Dienst-Operation auszuführen; und
einem Dienstlogikmodul (20618), das eingerichtet ist, um eine Cloud-Dienst-Logik zu speichern.

4. Cloud-Dienst-Vermittler nach Anspruch 1, **dadurch gekennzeichnet, dass** das Cloud-Dienst-Anpassungsmodul (208) mindestens eines umfasst aus: einem Infrastruktur-als-Dienst(IaaS)-Anpassungsmodul (2082), einem Speicher-als-Dienst(DaaS)-Anpassungsmodul (2084), einem Plattform-als-Dienst(PaaS)-Anpassungsmodul (2086) und ein Software-als-Dienst(SaaS)-Anpassungsmodul (2088);
das laaS-Anpassungsmodul (2082) ein gemeinsames laaS-Anpassungsmodul und/oder ein zweckgebundenes laaS-Anpassungsmodul umfasst; das DaaS-Anpassungsmodul (2084) ein gemeinsames DaaS-Anpassungsmodul und/oder ein zweckgebundenes DaaS-Anpassungsmodul umfasst; das PaaS-Anpassungsmodul (2086) ein gemeinsames PaaS-Anpassungsmodul und/oder ein zweckgebundenes PaaS-Anpassungsmodul umfasst; das SaaS-Anpassungsmodul (2088) ein gemeinsames SaaS-Anpassungsmodul und/oder ein zweckgebundenes SaaS-Anpassungsmodul umfasst;
das gemeinsame IaaS-Anpassungsmodul eingerichtet ist, um mindestens ein Protokoll anzupassen aus: Open Virtualization Format (OVF) der Distributed Management Task Force (DMTF) und Open Cloud Computing Interface (OCCI) des Open Grid Forum (OGF); und
das gemeinsame DaaS-Anpassungsmodul eingerichtet ist, um eine Clouddaten-Verwaltungsschnittstelle (CDMI) der Storage Networking Industry Association (SNIA) anzupassen.

5. Cloud-Dienst-Vermittler nach Anspruch 3, **dadurch gekennzeichnet, dass** im Katalogdatenbankmodul (2062) die Informationen von Cloud-Computing-Diensten und/oder - Ressourcen gemäß der Art der Dienste aus mindestens einem gespeichert werden aus: IaaS-Informationen, DaaS-Informationen, PaaS-Informationen und SaaS-Informationen oder der Art der Cloud-Dienst-Anbieter oder der Art der Cloud-Dienst-Anbieter und der Dienste.

6. Cloud-Computing-Verfahren, umfassend:
einen Cloud-Dienst-Vermittler, der Vermittlungsdienste für verschiedene Cloud-Dienst-Anbieter bereitstellt,
**dadurch gekennzeichnet, dass** der Cloud-Dienst-Vermittler die Vermittlungsdienste aus mindestens einem bereitstellt aus: Permutationsdienst und Synthesedienst zwischen einer Vielzahl von Cloud-Dienst-Anbietern von mindestens einem aus: Private Cloud, Community Cloud, Public Cloud und Hybrid Cloud, und einer Vielzahl von Cloud-Dienst-Anforderern von mindestens einem aus: WEB-Dienst, Anwendung und Benutzer,
wobei sich der durch den Cloud-Dienst-Vermittler bereitgestellte Permutationsdienst zwischen der Vielzahl von Cloud-Dienst-Anbietern und Cloud-Dienst-Anforderern befindet und der Permutationsdienst so eingerichtet ist, dass der Cloud-Dienst-Vermittler einen oder mehrere Ersatz-Cloud-Dienst-Anbieter auswählt, um weiterhin Dienste für Cloud-Dienst-Anforderer bereitzustellen, wenn einer oder mehrere der Cloud-Dienst-Anbieter keine Antwort an den Cloud-Dienst-Vermittler zurückgeben oder bei der Antwort eine Zeitüberschreitung aufgetreten ist; und
sich der durch den Cloud-Dienst-Vermittler bereitgestellte Synthesedienst zwischen der Vielzahl von Cloud-Dienst-Anbietern und Cloud-Dienst-Anforderern befindet und der Synthesedienst mindestens eines aus statischem Synthesedienst und dynamischem Synthesedienst umfasst, wobei der statische Synthesedienst durch eine spezielle Dienstlogik ausgeführt wird und der dynamische Synthesedienst durch eine abstrakte Dienstlogik ausgeführt wird.

7. Cloud-Computing-Verfahren nach Anspruch 6, **dadurch gekennzeichnet, dass**
der Cloud-Dienst-Vermittler eine Cloud-Dienst-Kundenanforderung empfängt, die durch einen Cloud-Dienst-Anforderer gesendet wurde;
Cloud-Computing-Dienste und/oder -Ressourcen ausgewählt werden, die durch einen Cloud-Dienst-Anbieter und/oder einem Funktionsmodus bereitgestellt werden, und eine Cloud-Dienst-Operation ausgeführt wird;
die Cloud-Computing-Dienste und/oder -Ressourcen angepasst oder aufgerufen werden, die durch den Cloud-Dienst-Anbieter bereitgestellt werden; und
eine Cloud-Dienst-Kundenantwort an den Cloud-Dienst-Anforderer zurückgegeben wird.

8. Cloud-Computing-Verfahren nach Anspruch 7, **dadurch gekennzeichnet, dass**, wenn der Funktionsmodus der Permutationsdienst ist, vor dem Schritt, in dem der Cloud-Dienst-Vermittler die Cloud-Computing-Dienste und/oder -Ressourcen anpasst, die durch den Cloud-Dienst-Anbieter bereitgestellt werden, das Verfahren ferner umfasst:
der Cloud-Dienst-Vermittler innerhalb einer festgelegten Zeit keine Dienstanpassungsantwort ausgewählten Cloud-Dienst-Anbieter empfängt;
der Cloud-Dienst-Vermittler einen anderen Cloud-Dienst-Anbieter auswählt und die Cloud-Dienst-Anpassungsanforderung an den anderen Cloud-Dienst-Anbieter sendet; und
der Cloud-Dienst-Vermittler eine Dienstanpassungsantwort von dem anderen Cloud-Dienst-Anbieter empfängt.

9. Cloud-Computing-Verfahren nach Anspruch 7, **dadurch gekennzeichnet, dass**, wenn der Funktionsmodus der Synthesedienst ist, vor dem Schritt, in dem der Cloud-Dienst-Vermittler die Cloud-Computing-Dienste und/oder -Ressourcen anpasst, die durch den Cloud-Dienst-Anbieter bereitgestellt werden, das Verfahren ferner umfasst:
der Cloud-Dienst-Vermittler die Cloud-Dienst-Kundenanforderung jeweils in Cloud-Dienst-Anpassungsanforderungen umwandelt, die den Protokollen entsprechen, die durch die Vielzahl von Cloud-Dienst-Anbietern verwendet werden, die Cloud-Dienste bereitstellen, und die Cloud-Dienst-Anpassungsanforderungen jeweils an die Vielzahl von Cloud-Dienst-Anbietern sendet; und
der Cloud-Dienst-Vermittler eine Vielzahl von Dienstanpassungsantworten von der Vielzahl von Cloud-Dienst-Anbietern empfängt.

10. Cloud-Computing-Verfahren nach Anspruch 6, **dadurch gekennzeichnet, dass** der Cloud-Dienst-Vermittler ferner die Vermittlungsdienste aus mindestens einem aus Proxy-Dienst, Steuerungsdienst, Abschirmdienst und Sicherheitsdienst bereitstellt, wobei:
sich der durch den Cloud-Dienst-Vermittler bereitgestellte Proxy-Dienst oder Entscheidungsdienst zwischen der Vielzahl von Cloud-Dienst-Anbietern und Cloud-Dienst-Anforderern befindet und der Cloud-Dienst-Vermittler als Proxy-Server dient;
sich der durch den Cloud-Dienst-Vermittler bereitgestellte Sicherheitsdienst zwischen der Vielzahl von Cloud-Dienst-Anbietern und Cloud-Dienst-Anforderern befindet und der Cloud-Dienst-Vermittler Vertraulichkeit, Integrität und Verfügbarkeit von Cloud-Diensten garantiert und Mechanismen von mindestens einem aus Zertifizierung, Authentifizierung, Autorisierung, Transport Layer Security (TLS), Internet Protocol Security (IPSec), Sicherheit auf der Anwendungsschicht, Zertifikaten, digitalen Signaturen, Firewalls und Erkennung des Eindringens bereitstellt;
der durch den Cloud-Dienst-Vermittler bereitgestellte Steuerungsdienst eine QoS-/SLA-Steuerung zwischen der Vielzahl von Cloud-Dienst-Anbietern und Cloud-Dienst-Anforderern ist und der Cloud-Dienst-Vermittler Cloud-Dienste und/oder -Ressourcen des am besten geeigneten Cloud-Dienst-Anbieters gemäß Faktoren von mindestens einem aus Richtlinie, Benutzervoreinstellung, Geräteumgebung und Netzwerkstatus auswählt; und
sich der durch den Cloud-Dienst-Vermittler bereitgestellte Abschirmungsdienst zwischen der Vielzahl von Cloud-Dienst-Anbietern und Cloud-Dienst-Anforderern befindet und der Cloud-Dienst-Vermittler Cloud-Dienst-/Cloud-Ressourceninhalte gemäß den Abschirmungsregeln von mindestens einem aus Abschirmen unzulässiger Anforderungen von den Cloud-Dienst-Anforderern, Filtern einiger Cloud-Dienst-/Cloud-Ressourceninhalte und Bereitstellen bestimmter Cloud-Dienst-/Cloud-Ressourceninhalte für einige Cloud-Dienst-Anforderer zu einem bestimmten Zeitpunkt bereitstellt.

11. Cloud-System, umfassend: einen Cloud-Dienst-Anforderer, einen Cloud-Dienst-Vermittler und einen Cloud-Dienst-Anbieter, wobei
der Cloud-Dienst-Anforderer eingerichtet ist, um eine Cloud-Dienst-Kundenanforderung an den Cloud-Dienst-Vermittler zu senden; eine Cloud-Dienst-Kundenantwort vom Cloud-Dienst-Vermittler zu empfangen und eine durch den Cloud-Dienst-Vermittler bereitgestellte Schnittstelle zu verwenden, um auf einen Cloud-Dienst des Cloud-Dienst-Anbieters zuzugreifen;
der Cloud-Dienst-Vermittler eingerichtet ist, um Cloud-Dienst-Informationen einer Vielzahl von Cloud-Dienst-Anbietern zu abonnieren; eine Nutzungsschnittstelle für den Cloud-Dienst-Anforderer zum Zugriff auf den Cloud-Dienst-Anbieter bereitzustellen; eine Cloud-Dienst-Kundenanforderung des Cloud-Dienst-Anforderers zur verarbeiten und durch den Cloud-Dienst-Anbieter bereitgestellte Cloud-Computing-Dienste und/oder -Ressourcen anzupassen oder aufzurufen; und
der Cloud-Dienst-Anbieter eingerichtet ist, um eine Cloud-Dienst-Anpassungsanforderung des Cloud-Dienst-Vermittlers zu empfangen, eine Cloud-DienstAnpassungsantwort an den Cloud-Dienst-Vermittler zurückzugeben und dem Cloud-Dienst-Anforderer Cloud-Computing-Dienste und/oder -Ressourcen bereitzustellen und Informationen von Cloud-Computing-Diensten und/oder -Ressourcen dem Cloud-Dienst-Vermittler gegenüber zu veröffentlichen,
**dadurch gekennzeichnet, dass** der Cloud-Dienst-Vermittler Vermittlungsdienste aus mindestens einem aus Permutationsdienst und Synthesedienst bereitstellt,
wobei sich der durch den Cloud-Dienst-Vermittler bereitgestellte Permutationsdienst zwischen der Vielzahl von Cloud-Dienst-Anbietern und Cloud-Dienst-Anforderern befindet und der Permutationsdienst so eingerichtet ist, dass der Cloud-Dienst-Vermittler einen oder mehrere Ersatz-Cloud-Dienst-Anbieter auswählt, um weiterhin Dienste für Cloud-Dienst-Anforderer bereitzustellen, wenn einer oder mehrere der Cloud-Dienst-Anbieter keine Antwort an den Cloud-Dienst-Vermittler zurückgeben oder bei der Antwort eine Zeitüberschreitung aufgetreten ist; und
sich der durch den Cloud-Dienst-Vermittler bereitgestellte Synthesedienst zwischen der Vielzahl von Cloud-Dienst-Anbietern und Cloud-Dienst-Anforderern befindet und der Synthesedienst mindestens eines aus statischem Synthesedienst und dynamischem Synthesedienst umfasst, wobei der statische Synthesedienst durch eine spezielle Dienstlogik ausgeführt wird und der dynamische Synthesedienst durch eine abstrakte Dienstlogik ausgeführt wird.

12. Cloud-System nach Anspruch 11, **dadurch gekennzeichnet, dass** der Cloud-Dienst-Vermittler umfasst:
ein Cloud-Dienst-Veröffentlichungsschnittstellenmodul (202), das eingerichtet ist, um Informationen von Cloud-Computing-Diensten und/oder -Ressourcen zu abonnieren, die durch mindestens einen Cloud-Dienst-Anbieter von Private Cloud, Community Cloud, Public Cloud und Hybrid Cloud veröffentlicht und unterstützt werden;
ein Cloud-Dienste nutzendes Schnittstellenmodul (204), das eingerichtet ist, um eine Cloud-Dienst-Kundenanforderung von mindestens einem Cloud-Dienst-Anforderer von: WEB-Dienst, Anwendung und Benutzer zu empfangen, und die Cloud-Dienst-Kundenantwort an den Cloud-Dienst-Anforderer zurückzugeben;
ein Cloud-Dienst-Verarbeitungsmodul (206), das eingerichtet ist, um den zur Nutzung angeforderten Cloud-Dienst aus der Cloud-Dienst-Kundenanforderung zu analysieren, die Cloud-Computing-Dienste und/oder Ressourcen auszuwählen, die durch den Cloud-Dienst-Anbieter bereitgestellt werden, und einen durch das Cloud-Dienst-Verarbeitungsmodul (206) bereitgestellten Funktionsmodus auszuwählen und eine Cloud-Dienst-Operation gemäß der Cloud-Dienst-Kundenanforderung auszuführen; und
ein Cloud-Dienst-Anpassungsmodul (208), das eingerichtet ist, um die durch den Cloud-Dienst-Anbieter bereitgestellten Cloud-Computing-Dienste und/oder -Ressourcen im Protokoll anzupassen oder aufzurufen.

13. Cloud-System nach Anspruch 12, **dadurch gekennzeichnet, dass** das Cloud-Dienst-Verarbeitungsmodul (206) mindestens eines umfasst aus:
einem Katalogdatenbankmodul (2062), das eingerichtet ist, um Informationen von Cloud-Computing-Diensten und/oder -Ressourcen zu speichern;
einem Dienstleistungsvereinbarung(SLA)-Steuerungs-/Richtliniensteuerungsmodul (2064), das eingerichtet ist, um SLA-Verwaltungs- und/oder Steuerungsrichtlinien für verschiedene Cloud-Computing-Dienste und/oder -Ressourcen festzulegen;
einem Sicherheitsmodul (2066), das eingerichtet ist, um dem Cloud-Dienst-Anforderer eine Sicherheitszusicherung für den Zugriff auf den Cloud-Dienst bereitzustellen;
einem Dienstqualitäts(QoS)-Steuerungsmodul (2068), das eingerichtet ist, um eine QoS-Steuerung für den Cloud-Dienst bereitzustellen;
einem Überwachungsverwaltungsmodul (20610), das eingerichtet ist, um den laufenden Status des Cloud-Dienstes zu überwachen;
einem Bereitstellungsverwaltungsmodul (20612), das eingerichtet ist, um Dienstfunktionsmodi des Cloud-Dienst-Vermittlers zu kombinieren, um den durch den Cloud-Dienst-Vermittler abonnierten Cloud-Dienst zu konfigurieren;
einem Gebührenberechnungsmodul (20614), das eingerichtet ist, um dem Cloud-Dienst-Anforderer Gebühren für den Zugriff auf den Cloud-Dienst zu berechnen;
einem Dienstausführungsmodul (20616), das eingerichtet ist, um einen Cloud-Dienst und die zugehörige Dienstlogik und den zugehörigen Funktionsmodus gemäß der Cloud-Dienst-Kundenanforderung auszuwählen und die Cloud-Dienst-Operation auszuführen; und
einem Dienstlogikmodul (20618), das eingerichtet ist, um eine Cloud-Dienst-Logik zu speichern.

14. Cloud-System nach Anspruch 11, **dadurch gekennzeichnet, dass**
der Cloud-Dienst-Vermittler ferner Vermittlungsdienste für mindestens eines aus Proxy-Dienst, Steuerungsdienst, Abschirmdienst und Sicherheitsdienst bereitstellt, wobei:
sich der durch den Cloud-Dienst-Vermittler bereitgestellte Proxy-Dienst oder Entscheidungsdienst zwischen einer Vielzahl von Cloud-Dienst-Anbietern und Cloud-Dienst-Anforderern befindet und der Cloud-Dienst-Vermittler als Proxy-Server dient;
der durch den Cloud-Dienst-Vermittler bereitgestellte Steuerungsdienst eine QoS/SLA-Steuerung zwischen der Vielzahl von Cloud-Dienst-Anbietern und Cloud-Dienst-Anforderern ist und der Cloud-Dienst-Vermittler Cloud-Dienste und/oder -Ressourcen des am besten geeigneten Cloud-Dienst-Anbieters gemäß Faktoren von mindestens einem aus Richtlinie, Benutzervoreinstellung, Geräteumgebung und Netzwerkstatus auswählt;
sich der durch den Cloud-Dienst-Vermittler bereitgestellte Abschirmungsdienst zwischen der Vielzahl von Cloud-Dienst-Anbietern und Cloud-Dienst-Anforderern befindet und der Cloud-Dienst-Vermittler Cloud-Dienst-/Cloud-Ressourceninhalte gemäß den Abschirmungsregeln von mindestens einem aus Abschirmen unzulässiger Anforderungen von den Cloud Dienst-Anforderern, Filtern einiger Cloud-Dienst-/Cloud-Ressourceninhalte und Bereitstellen bestimmter Cloud-Dienst-/Cloud-Ressourceninhalte für einige Cloud-Dienst-Anforderer zu einem bestimmten Zeitpunkt bereitstellt; und
sich der durch den Cloud-Dienst-Vermittler bereitgestellte Sicherheitsdienst zwischen der Vielzahl von Cloud-Dienst-Anbietern und Cloud-Dienst-Anforderern befindet und der Cloud-Dienst-Vermittler Vertraulichkeit, Integrität und Verfügbarkeit von Cloud-Diensten garantiert und Mechanismen von mindestens einem aus Zertifizierung, Authentifizierung, Autorisierung, TLS (Transport Layer Security), IPSec (Internet Protocol Security), Sicherheit auf der Anwendungsschicht, Zertifikaten, digitalen Signaturen, Firewalls und Erkennung des Eindringens bereitstellt.

## Revendications

1. Courtier de services infonuagiques, comprenant :
un module d'interface de publication de services infonuagiques (202), conçu pour s'abonner aux informations de services et/ou de ressources infonuagiques publiées et prises en charge par au moins un fournisseur de services infonuagiques tels que : nuage privé, nuage de communauté, nuage public et nuage hybride ;
un module d'interface de consommation de services infonuagiques (204), conçu pour recevoir une demande de consommateur de services infonuagiques d'au moins un demandeur de services infonuagiques de : service Web, application et utilisateur et renvoyer une réponse de consommateur de services infonuagiques au demandeur de services infonuagiques ;
un module de traitement de services infonuagiques (206), conçu pour analyser un service infonuagique requis pour la consommation par la demande de consommateur de services infonuagiques, pour sélectionner les services et/ou ressources infonuagiques fournis par le fournisseur de services infonuagiques et pour sélectionner un mode fonction fourni par le module de traitement de services infonuagiques (206) et pour exécuter une opération de services infonuagiques conformément à la demande de consommateur de services infonuagiques ; et
un module d'adaptation de services infonuagiques (208), conçu pour adapter ou appeler par protocole les services et/ou ressources infonuagiques fournis par le fournisseur de services infonuagiques,
**caractérisé en ce que** le courtier de services infonuagiques fournit des services de courtage d'un service de permutation et/ou d'un service de synthèse,
le service de permutation fourni par le courtier de services infonuagiques se situant entre la pluralité de fournisseurs de services infonuagiques et de demandeurs de services infonuagiques et le service de permutation étant conçu de sorte que le courtier de services infonuagiques sélectionne un ou plusieurs fournisseurs de services infonuagiques de substitution pour poursuivre la fourniture des services pour les demandeurs de services infonuagiques lorsqu'un ou plusieurs fournisseurs de services infonuagiques ne renvoient pas de réponse au courtier de services infonuagiques ou que le délai de réponse est dépassé ; et
le service de synthèse fourni par le courtier de services infonuagiques se situant entre la pluralité de fournisseurs de services infonuagiques et les demandeurs de services infonuagiques et le service de synthèse comprenant au moins un des services suivants : service de synthèse statique et service de synthèse dynamique, le service de synthèse statique est exécuté par une logique de service spécifique et le service de synthèse dynamique est exécuté par une logique de service abstraite.

2. Courtier de services infonuagiques selon la revendication 1, **caractérisé en ce que**
le courtier de services infonuagiques fournit en outre des services de courtage comprenant au moins l'un des services suivants : service mandataire, service de commande, service de protection et service de sécurité :
le service mandataire ou le service d'arbitrage fourni par le courtier de services infonuagiques se situant entre une pluralité de fournisseurs de services infonuagiques et les demandeurs de services infonuagiques et le courtier de services infonuagiques servant de serveur mandataire ;
le service de commande fourni par le courtier de services infonuagiques est une commande QoS/SLA entre la pluralité de fournisseurs de services infonuagiques et les demandeurs de services infonuagiques et le courtier de services infonuagiques sélectionne les services et/ou ressources infonuagiques du fournisseur de services infonuagiques le plus approprié en fonction de l'un des éléments suivants : politique, préférences utilisateur, environnement de l'équipement et état du réseau ;
le service de protection fourni par le courtier de services infonuagiques se situe entre la pluralité de fournisseurs de services infonuagiques et les demandeurs de services infonuagiques et le courtier de services infonuagiques fournit les contenus de services/ressources infonuagiques en fonction des règles de protection d'au moins un des éléments suivants : protection de demandes illégales de demandeurs de services infonuagiques, filtrage de certains contenus de services/ressources infonuagiques et fourniture de contenus spécifiques de services/ressources infonuagiques à certains demandeurs de services infonuagiques à une heure précise ; et
le service de sécurité fourni par le courtier de services infonuagiques se situe entre la pluralité de fournisseurs de services infonuagiques et les demandeurs de services infonuagiques et le courtier de services infonuagiques garantit la confidentialité, l'intégrité et la disponibilité des services infonuagiques et fournit des mécanismes de certification et/ou d'authentification et/ou d'autorisation et/ou de sécurité de la couche de transport (TLS) et/ou de sécurité du protocole Internet (IPSec) et/ou de sécurité de couche d'application et/ou de certificats et/ou de signatures numériques et/ou de pare-feux et/ou de détection d'intrusion.

3. Courtier de services infonuagiques selon la revendication 1, **caractérisé en ce que** le module de traitement de services infonuagiques (206) comprend au moins l'un des éléments suivants :
un module de base de données de catalogue (2062), conçu pour mémoriser les informations de services et/ou de ressources infonuagiques ;
un module d'accord de niveau de service (SLA)/de commande de politique (2064), conçu pour définir des politiques de gestion et/ou de commande de SLA de divers services et/ou ressources infonuagiques ;
un module de sécurité (2066), conçu pour fournir une assurance de la sécurité permettant au demandeur de services infonuagiques d'accéder à un service infonuagique ;
un module de commande de qualité de service (QoS) (2068), conçu pour fournir une commande de QoS pour le service infonuagique ;
un module de gestion de surveillance (20610), conçu pour surveiller un état de fonctionnement du service infonuagique ;
un module de gestion de déploiement (20612), conçu pour combiner des modes fonction de services du courtier de services infonuagiques pour configurer le service infonuagique auquel est abonné le courtier de services infonuagiques ;
un module de facturation (20614) conçu pour facturer le demandeur de services infonuagiques pour accéder au service infonuagique ;
un module d'exécution de service (20616), conçu pour sélectionner un service infonuagique et la logique de service associée et le mode fonction en fonction de la demande du consommateur de services infonuagiques et pour exécuter l'opération de services infonuagiques ; et
un module de logique de service (20618), conçu pour mémoriser une logique de service infonuagique.

4. Courtier de services infonuagiques selon la revendication 1, **caractérisé en ce que** le module d'adaptation de services infonuagiques (208) comprend au moins l'un des éléments suivants : un module d'adaptation (2082) d'infrastructure en tant que service (IaaS), un module d'adaptation (2084) de stockage de données en tant que service (DaaS), un module d'adaptation (2086) de plate-forme en tant que service (PaaS) et un module d'adaptation (2088) de logiciel en tant que service (SaaS) ;
le module d'adaptation IaaS (2082) comprend un module d'adaptation commun IaaS et/ou un module d'adaptation dédié IaaS ; le module d'adaptation DaaS (2084) comprend un module d'adaptation commun DaaS et/ou un module d'adaptation dédié DaaS ; le module d'adaptation PaaS (2086) comprend un module d'adaptation commun PaaS et/ou un module d'adaptation dédié PaaS ; le module d'adaptation SaaS (2088) comprend un module d'adaptation commun SaaS et/ou un module d'adaptation dédié SaaS ;
le module d'adaptation commun IaaS est conçu pour adapter au moins un protocole de : format de virtualisation ouvert (OVF) du groupe de travail de gestion répartie (DMTF) et d'interface infonuagique ouverte (OCCI) du forum Open Grid (OGF) ; et
le module d'adaptation commun DaaS est conçu pour adapter une interface de gestion de données en nuage (CDMI) de la SNIA (Storage Networking Industry Association).

5. Courtier de services infonuagiques selon la revendication 3, **caractérisé en ce que** le module de base de données de catalogue (2062) mémorise les informations de services et/ou de ressources infonuagiques en fonction du type de services d'au moins l'un des éléments suivants : des informations IaaS, des informations DaaS, des informations PaaS et des informations SaaS ou un type de fournisseurs de services infonuagiques ou le type des fournisseurs de services infonuagiques et des services.

6. Procédé d'infonuagique, comprenant :
un courtier de services infonuagiques fournissant des services de courtage pour divers fournisseurs de services infonuagiques,
**caractérisé en ce que** le courtier de services infonuagiques fournit les services de courtage d'au moins l'un des services suivants : service de permutation et service de synthèse, entre une pluralité de fournisseurs infonuagiques d'au moins un des éléments suivants : nuage privé, nuage de communauté, nuage public et nuage hybride et une pluralité de demandeurs de services infonuagiques d'au moins l'un des éléments suivants : un service Web, une application et un utilisateur,
le service de permutation fourni par le courtier de services infonuagiques se situant entre la pluralité de fournisseurs de services infonuagiques et les demandeurs de services infonuagiques et le service de permutation étant conçu pour que le courtier de services infonuagiques sélectionne un ou plusieurs fournisseurs de services infonuagiques de substitution pour continuer de fournir des services aux demandeurs de services infonuagiques lorsqu'un ou plusieurs fournisseurs de services infonuagiques ne renvoient pas de réponse au courtier de services infonuagiques ou que le délai de réponse est dépassé ; et
le service de synthèse fourni par le courtier de services infonuagiques se situant entre la pluralité de fournisseurs de services infonuagiques et les demandeurs de services infonuagiques et le service de synthèse comprenant au moins un des services suivants : service de synthèse statique et service de synthèse dynamique, le service de synthèse statique est exécuté par une logique de service spécifique et le service de synthèse dynamique est exécuté par une logique de service abstraite.

7. Procédé d'infonuagique selon la revendication 6, **caractérisé en ce que**
le courtier de services infonuagiques reçoit une demande de consommateur de services infonuagiques envoyée par un demandeur de services infonuagiques ;
sélectionne des services et/ou des ressources infonuagiques fournis par un fournisseur de services infonuagiques et/ou un mode fonction et exécute une opération de services infonuagiques ;
adapte ou appelle les services et/ou ressources infonuagiques fournis par le fournisseur de services infonuagiques ; et
renvoie une réponse de consommateur de services infonuagiques au demandeur de services infonuagiques.

8. Procédé d'infonuagique selon la revendication 7, **caractérisé en ce que**, lorsque le mode fonction est le service de permutation, avant l'étape consistant **en ce que** le courtier de services infonuagiques adapte les services et/ou ressources infonuagiques fournis par le fournisseur de services infonuagiques, le procédé comprenant en outre :
le courtier de services infonuagiques ne reçoit pas de réponse d'adaptation de service provenant du fournisseur de services infonuagiques sélectionné dans un délai déterminé ;
le courtier de services infonuagiques sélectionne un autre fournisseur de services infonuagiques et envoie la demande d'adaptation de services infonuagiques audit autre fournisseur de services infonuagiques ; et
le courtier de services infonuagiques reçoit une réponse d'adaptation de service dudit autre fournisseur de services infonuagiques.

9. Procédé d'infonuagique selon la revendication 7, **caractérisé en ce que**, lorsque le mode fonction est le service de synthèse, avant l'étape consistant **en ce que** le courtier de services infonuagiques adapte les services et/ou ressources infonuagiques fournis par le fournisseur de services infonuagiques, le procédé comprenant en outre :
le courtier de services infonuagiques convertit respectivement la demande de consommateur de services infonuagiques en demandes d'adaptation de services infonuagiques conformes aux protocoles utilisés par la pluralité de fournisseurs de services infonuagiques qui fournissent des services infonuagiques et envoie respectivement les demandes d'adaptation de services infonuagiques à la pluralité de fournisseurs de services infonuagiques ; et
le courtier de services infonuagiques reçoit une pluralité de réponses d'adaptation de service en provenance de la pluralité de fournisseurs de services infonuagiques.

10. Procédé d'infonuagique selon la revendication 6, **caractérisé en ce que** le courtier de services infonuagiques fournit en outre les services de courtage d'un service mandataire et/ou d'un service de commande et/ou d'un service de protection et d'un service de sécurité :
le service mandataire ou le service d'arbitrage fourni par le courtier de services infonuagiques se situant entre la pluralité de fournisseurs de services infonuagiques et les demandeurs de services infonuagiques et le courtier de services infonuagiques servant de serveur mandataire ;
le service de sécurité fourni par le courtier de services infonuagiques se situant entre la pluralité de fournisseurs de services infonuagiques et les demandeurs de services infonuagiques et le coursier de services infonuagiques garantit la confidentialité, l'intégrité et la disponibilité de services infonuagiques et fournit des mécanismes de certification et/ou d'authentification et/ou d'autorisation et/ou de sécurité de la couche de transport (TLS) et/ou de sécurité du protocole Internet (IPSec) et/ou de sécurité de couche d'application et/ou de certificats et/ou de signatures numériques et/ou de pare-feux et/ou de détection d'intrusion ;
le service de commande fourni par le courtier de services infonuagiques est le contrôle de qualité de service (QoS)/accord de niveau de service (SLA) entre la pluralité de fournisseurs de services infonuagiques et les demandeurs de services infonuagiques et le courtier de services infonuagiques sélectionne des services et/ou ressources infonuagiques du fournisseur de services infonuagiques le plus approprié en fonction d'au moins un des éléments suivants : politique, préférences utilisateur, environnement de l'équipement et état du réseau ; et
le service de protection fourni par le courtier de services infonuagiques se situe entre la pluralité de fournisseurs de services infonuagiques et les demandeurs de services infonuagiques et le courtier de services infonuagiques fournit les contenus de services/ressources infonuagiques en fonction d'au moins une des règles de protection suivantes : protection des demandes illégales des demandeurs de services infonuagiques, filtrage de certains contenus de services/ressources infonuagiques et fourniture de contenus spécifiques de services/ressources infonuagiques à certains demandeurs de services infonuagiques à une heure précise.

11. Système d'infonuagique, comprenant : un demandeur de services infonuagiques, un courtier de services infonuagiques et un fournisseur de services infonuagiques,
le demandeur de services infonuagiques étant conçu pour envoyer une demande de consommateur de services infonuagiques au courtier de services infonuagiques ; pour recevoir une réponse du consommateur de services infonuagiques en provenance du courtier de services infonuagiques et pour utiliser une interface fournie par le courtier de services infonuagiques pour accéder à un service infonuagique du fournisseur de services infonuagiques ;
le courtier de services infonuagiques étant conçu pour s'abonner aux informations de services infonuagiques d'une pluralité de fournisseurs de services infonuagiques ; pour fournir une interface de consommation au demandeur de services infonuagiques pour accéder au fournisseur de services infonuagiques ; pour traiter une demande de consommateur de services infonuagiques du demandeur de service infonuagiques ; et pour adapter ou appeler des services et/ou ressources infonuagiques fournis par le fournisseur de services infonuagiques ; et
le fournisseur de services infonuagiques étant conçu pour recevoir une demande d'adaptation de services infonuagiques du courtier de services infonuagiques, pour renvoyer une réponse d'adaptation de services infonuagiques au courtier de services infonuagiques et fournir des services et/ou ressources infonuagiques au demandeur de services infonuagiques ; et pour publier des informations sur les services et/ou ressources infonuagiques pour le courtier de services infonuagiques,
**caractérisé en ce que** le courtier de services infonuagiques fournit des services de courtage d'un service de permutation et/ou d'un service de synthèse,
le service de permutation fourni par le courtier de services infonuagiques se situant entre la pluralité de fournisseurs de services infonuagiques et les demandeurs de services infonuagiques et le service de permutation étant conçu pour que le courtier de services infonuagiques sélectionne un ou plusieurs fournisseurs de services infonuagiques de substitution pour continuer de fournir des services aux demandeurs de services infonuagiques lorsqu'un ou plusieurs fournisseurs de services infonuagiques ne renvoient pas de réponse au courtier de services infonuagiques ou que le délai de réponse est dépassé ; et
le service de synthèse fourni par le courtier de services infonuagiques se situant entre la pluralité de fournisseurs de services infonuagiques et les demandeurs de services infonuagiques et le service de synthèse comprenant au moins un des services suivants : service de synthèse statique et service de synthèse dynamique, le service de synthèse statique est exécuté par une logique de service spécifique et le service de synthèse dynamique est exécuté par une logique de service abstraite.

12. Système d'infonuagique selon la revendication 11, **caractérisé en ce que** le courtier de services infonuagiques comprend :
un module d'interface de publication de services infonuagiques (202), conçu pour s'abonner aux informations de services et/ou de ressources infonuagiques publiées et prises en charge par au moins un fournisseur de services infonuagiques tels que : nuage privé, nuage de communauté, nuage public et nuage hybride ;
un module d'interface de consommation de services infonuagiques (204), conçu pour recevoir la demande de consommateur de services infonuagiques d'au moins un demandeur de services infonuagiques tel que : service Web, application et utilisateur et pour renvoyer la réponse de consommateur de services infonuagiques au demandeur de services infonuagiques ;
un module de traitement de service infonuagiques (206), conçu pour analyser le service infonuagique requis pour consommation par la demande de consommateur de services infonuagiques, pour sélectionner les services et/ou ressources infonuagiques fournis par le fournisseur de services infonuagiques et pour sélectionner un mode fonction fourni par le module de traitement de services infonuagiques (206) et pour exécuter une opération de services infonuagiques conformément à la demande de consommateur de services infonuagiques ; et
un module (208) d'adaptation de services infonuagiques, conçu pour adapter ou appeler par protocole les services et/ou ressources infonuagiques fournis par le fournisseur de services infonuagiques.

13. Système d'infonuagique selon la revendication 12, **caractérisé en ce que** le module de traitement de services infonuagiques (206) comprend l'un des éléments suivants :
un module de base de données de catalogue (2062), conçu pour mémoriser des informations des services et/ou ressources infonuagiques ;
un module d'accord de niveau de service (SLA)/de commande de politique (2064), conçu pour définir des politiques de gestion et/ou de commande de SLA de divers services et/ou ressources infonuagiques ;
un module de sécurité (2066), conçu pour fournir une assurance de la sécurité permettant au demandeur de services infonuagiques d'accéder au service infonuagique ;
un module de commande de qualité de service (QoS) (2068), conçu pour fournir une commande de QoS pour le service infonuagique ;
un module de gestion de surveillance (20610), conçu pour surveiller l'état de fonctionnement du service infonuagique ;
un module de gestion de déploiement (20612), conçu pour combiner des modes fonction de services du courtier de services infonuagiques pour configurer le service infonuagique auquel est abonné le courtier de services infonuagiques ;
un module de facturation (20614) conçu pour facturer le demandeur de services infonuagiques pour accéder au service infonuagique ;
un module d'exécution de service (20616), conçu pour sélectionner un service infonuagique et la logique de service associée et le mode fonction en fonction de la demande du consommateur de services infonuagiques et pour exécuter l'opération de services infonuagiques ; et
un module de logique de service (20618), conçu pour mémoriser une logique de service infonuagique.

14. Système d'infonuagique selon la revendication 11, **caractérisé en ce que**
le courtier de services infonuagiques fournit en outre des services de courtage comprenant au moins l'un des services suivants : service mandataire, service de commande, service de protection et service de sécurité :
le service mandataire ou le service d'arbitrage fourni par le courtier de services infonuagiques se situant entre une pluralité de fournisseurs de services infonuagiques et les demandeurs de services infonuagiques et le courtier de services infonuagiques servant de serveur mandataire ;
le service de commande fourni par le courtier de services infonuagiques est une commande QoS/SLA entre la pluralité de fournisseurs de services infonuagiques et les demandeurs de services infonuagiques et le courtier de services infonuagiques sélectionne les services et/ou ressources infonuagiques du fournisseur de services infonuagiques le plus approprié en fonction de l'un des éléments suivants : politique, préférences utilisateur, environnement de l'équipement et état du réseau ;
le service de protection fourni par le courtier de services infonuagiques se situe entre la pluralité de fournisseurs de services infonuagiques et les demandeurs de services infonuagiques et le courtier de services infonuagiques fournit les contenus de services/ressources infonuagiques en fonction des règles de protection d'au moins un des éléments suivants : protection de demandes illégales de demandeurs de services infonuagiques, filtrage de certains contenus de services/ressources infonuagiques et fourniture de contenus spécifiques de services/ressources infonuagiques à certains demandeurs de services infonuagiques à une heure précise ; et
le service de sécurité fourni par le courtier de services infonuagiques se situe entre la pluralité de fournisseurs de services infonuagiques et les demandeurs de services infonuagiques et le courtier de services infonuagiques garantit la confidentialité, l'intégrité et la disponibilité des services infonuagiques et fournit des mécanismes de certification et/ou d'authentification et/ou d'autorisation et/ou de sécurité de la couche de transport (TLS) et/ou de sécurité du protocole Internet (IPSec) et/ou de sécurité de couche d'application et/ou de certificats et/ou de signatures numériques et/ou de pare-feux et/ou de détection d'intrusion.
